(19) Europäisches Patentamt
European Patent Office
Office européen des brevets

(11) **EP 2 253 820 B1**

(12) **EUROPEAN PATENT SPECIFICATION**

(45) Date of publication and mention
of the grant of the patent:
**06.02.2013 Bulletin 2013/06**

(21) Application number: **09714259.0**

(22) Date of filing: **25.02.2009**

(51) Int Cl.:
**F02D 41/00** (2006.01)     **F02D 41/18** (2006.01)

(86) International application number:
**PCT/JP2009/000835**

(87) International publication number:
**WO 2009/107378 (03.09.2009 Gazette 2009/36)**

(54) **CONTROLLER FOR INTERNAL-COMBUSTION ENGINE**

REGLER FÜR VERBRENNUNGSMOTOR

DISPOSITIF DE COMMANDE POUR UN MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.02.2008 JP 2008044336**

(43) Date of publication of application:
**24.11.2010 Bulletin 2010/47**

(73) Proprietor: **Honda Motor Co., Ltd.**
**Minato-ku**
**Tokyo 107-8556 (JP)**

(72) Inventors:
• **TAKAMIYA, Hideharu**
**Wako-shi**
**Saitama 351-0193 (JP)**
• **IRIE, Seiichiro**
**Wako-shi**
**Saitama 351-0193 (JP)**
• **SASAKI, Shinsuke**
**Wako-shi**
**Saitama 351-0193 (JP)**

(74) Representative: **Prechtel, Jörg**
**Weickmann & Weickmann**
**Patentanwälte**
**Postfach 86 08 20**
**81635 München (DE)**

(56) References cited:
EP-A2- 1 375 883     WO-A1-2004/016925
WO-A1-2006/015919     JP-A- 9 287 507
JP-A- 2003 184 587     JP-A- 2004 150 345
JP-A- 2005 069 141     JP-A- 2005 069 141
JP-A- 2005 090 329     JP-A- 2007 182 787
JP-A- 2007 182 787

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a control apparatus for determining a target intake manifold pressure for an internal combustion engine.

Background Art

For a recent internal combustion engine, it has been proposed that a variable valve actuation mechanism for variably changing operation characteristics of each intake valve is mounted to control an intake air amount introduced into the internal combustion engine. The patent document 1 below describes controlling a variable valve actuation mechanism based on a target intake air amount, while controlling a throttle valve such that a target intake manifold pressure is generated.

Conventionally, m order to determine a target intake manifold pressure, one or more maps for defining target intake manifold pressures according to various operating states of an internal combustion engine are previously created and stored in a memory of a control apparatus, and the maps are referred to based on a detected operating state of the engine.

Patent Document 1: Japanese Patent Application Laid-Open No. 2004- 169573

WO 2004/016925 A1 discloses a method for regulating the filling of an internal combustion engine.

WO 2006 / 015919 A1 discloses a method and a device for controlling an internal combustion engine.

EP 1 375 883 A2 discloses a method for operating an internal combustion engine.

JP 2005-069141 A discloses an intake air quantity control device and method.

JP 2007-182787 A discloses a torque control device for an internal combustion engine.

Disclosure of the Invention

Problem to be solved by the invention

However, in order to address various operating states of an internal combustion engine in a conventional manner, the number of man- hours for creating maps and the amount of data defined in the maps may be increased. Furthermore, when a variable valve actuation mechanism as described above is mounted, the number of parameters regarding the operating state of the internal combustion engine is increased, which further increases the number of man-hours for creating maps and the amount of data defined in the maps. The intake manifold pressure is affected by the atmospheric pressure and the intake air temperature. If the target intake manifold pressure for each value of the atmospheric pressure and each value of the intake air temperature is defined in maps, the number of man-hours for creating the maps and the amount of data defined in the maps are further increased. As the number of man-hours for creating maps is increased, the development period is longer. As the amount of data defined in the maps is increased, a memory capacity in the control apparatus needs to be increased, which makes the cost higher. Therefore, even in an internal combustion engine on which a variable valve actuation mechanism is mounted, a technique is desired for determining a target intake manifold pressures according to various operating states of an internal combustion engine with better accuracy while suppressing the number of man-hours for creating maps and the amount of data defined in the maps.

Means for Solving Problem

According to one aspect of the present invention, a control for determining a target intake manifold pressure in an internal combustion engine that comprises a variable valve actuation mechanism for adjusting a lift amount of an intake valve and implements a first operating region in which a target intake air amount is achieved by changing the target intake manifold pressure while keeping a target lift amount constant is provided. In the control, the target lift amount in the first operating region is determined based on a reference intake air amount determined according to an operating state of the internal combustion engine. The target intake manifold pressure in the first operating region is represented by a first-order equation for the target intake air amount. The first-order equation is determined by calculating a slope and an intercept of the first-order equation based on the target lift amount. The target intake manifold pressure in the first operating region is calculated by substituting the target intake air amount in the first-order equation thus determined.

According to the present invention, because the target intake manifold pressure can be determined from the first-order equation, the target intake manifold pressure does not need to be predefined or stored in a map. Therefore, the number of man-hours for creating maps and the amount of data defined in the maps can be reduced.

According to one embodiment of the present invention, the variable valve actuation mechanism further adjusts a phase of the intake valve. Following the first operating region, a second operating region in which the target intake air amount is achieved by changing the target lift amount while keeping the target intake manifold pressure at a predetermined gauge pressure is implemented. Further, one or more maps defining correlations among an intake air amount, a rotational speed of the internal combustion engine, a gauge pressure of the intake manifold, a phase of the intake valve, and a lift amount of the intake valve under a standard condition of a standard atmospheric pressure and a standard intake air temperature are stored. The reference intake air amount under the standard condition is corrected in such a manner as to indicate a reference intake air amount under a present atmospheric pressure. A map corresponding to a target rotational speed of the internal combustion engine, the above predetermined gauge pressure and a predetermined phase is selected. The target lift amount is determined by referring to the selected map based on the reference intake air amount under the present atmospheric pressure.

According to the invention, because the reference intake air amount under the standard condition is corrected, only one or more intake air amount maps under the standard condition need to be stored. Because creating an intake air amount map for each value of the atmospheric pressure and each value of the intake air temperature is not required, the number of man-hours for creating maps and the amount of data defined in the maps can be reduced.

According to one embodiment of the present invention, a map corresponding to a detected rotational speed of the internal combustion engine, a detected phase of the intake valve, and the above predetermined gauge pressure is selected. A first intake air amount is determined by referring to the selected map based on the target lift amount. A map corresponding to the detected rotational speed of the internal combustion engine, the detected phase of the intake valve, and a second gauge pressure that differs from the predetermined gauge pressure is selected. A second intake air amount is determined by referring to the selected map based on the target lift amount. The slope is calculated based on the first intake air amount corresponding to the predetermined gauge pressure and the second intake air amount corresponding to the second gauge pressure.

Thus, the slope of the first-order equation can be determined by referring to the maps under the standard condition, and hence the target intake manifold pressure can be determined. As a result, the number of man-hours for creating maps and the amount of data defined in the maps can be reduced.

According to one embodiment of the present invention, a map corresponding to the target rotational speed of the internal combustion engine, the above predetermined gauge pressure and a predetermined phase is selected. A standard lift amount is determined by referring to the selected map based on the reference intake air amount under the standard condition. A map corresponding to the detected rotational speed of the internal combustion engine, the detected phase of the intake valve and the above predetermined gauge pressure is selected. A transition intake air amount at a transition from the first operating region to the second operating region is determined by referring to the selected map based on the standard lift amount. The intercept is calculated based on the slope and the transition intake air amount.

Thus, the intercept of the first-order equation can be determined by referring to the maps under the standard condition, and hence the target intake manifold pressure can be determined. As a result, the number of man-hours for creating maps and the amount of data defined in the maps can be reduced.

According to one embodiment of the present invention, the target intake manifold pressure is limited such that the target intake manifold pressure does not exceed the above predetermined gauge pressure. Thus, the target intake manifold pressure can be kept at the predetermined gauge pressure in the second operating region after the target intake manifold pressure reaches the predetermined gauge pressure.

According to one embodiment of the present invention, the reference intake air amount under the standard condition is corrected in such a manner as to indicate a reference intake air amount under a present atmospheric pressure and a present intake air temperature. A map corresponding to the target rotational speed of the internal combustion engine, the above predetermined gauge pressure and the predetermined phase is selected. A second target lift amount is determined by referring to the selected map based on the reference intake air amount under the present atmospheric pressure and the present intake air temperature. The variable valve actuation mechanism is operated according to the second target lift amount.

According to the invention, a second target lift amount for operating the variable valve actuation mechanism can be determined by referring to the map under the standard condition. Setting a map for each value of the intake air temperature and each value of the atmospheric pressure is not required. According to the findings of the inventors, by adjusting the lift amount, a change in the intake air temperature does not almost affect a change in the intake manifold pressure. Therefore, considering only a change in the atmospheric pressure is sufficient for the target intake manifold pressure. Considering a change in the intake air temperature is not required.

Brief Description of the Drawings

Figure 1 is a diagram showing an overall structure of an internal combustion engine and its control unit in accordance with one embodiment of the present invention;

Figure 2 is a diagram for explaining a control overview in accordance with one embodiment of the present invention;

Figure 3 is a functional block diagram for a control apparatus in accordance with one embodiment of the present invention;

Figure 4 shows one example of an intake air amount map in accordance with one embodiment of the present invention;

Figure 5 shows one example of an intake air amount map in accordance with one embodiment of the present invention;

Figure 6 shows a model of an intake valve in accordance with one embodiment of the present invention;

Figure 7 is a flowchart showing a main flow of a control in accordance with one embodiment of the present invention;

Figure 8 is a flowchart of a process for determining a target lift amount in accordance with one embodiment of the present invention;

Figure 9 is a flowchart of a process for determining a first and a second intake air amounts corresponding to a first and a second gauge pressures in accordance with one embodiment of the present invention;

Figure 10 shows one example of an intake air amount map in accordance with one embodiment of the present invention; and

Figure 11 is a flowchart of a process for determining a transition intake air amount in accordance with one embodiment of the present invention.

Best Mode for carrying out the Invention

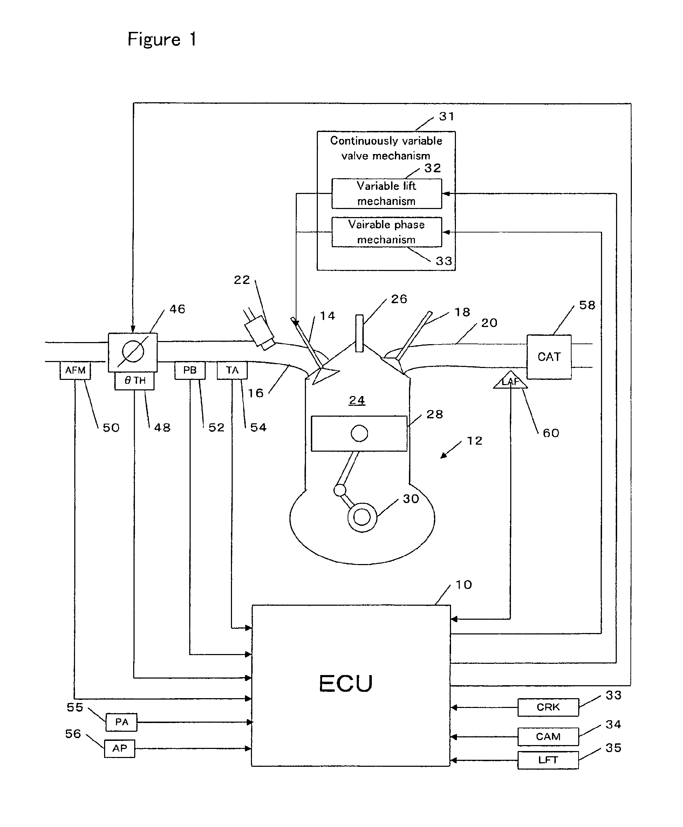

Embodiments of the present invention will be described referring to the attached drawings. Figure 1 is an overall structure of an internal combustion engine (hereinafter referred to as an engine) and its control unit in accordance with one embodiment of the present invention.

An electronic control unit (hereinafter referred to as an ECU) 10 is a computer having an input/output interface, a central processing unit (CPU) and a memory. One or more computer programs for implementing various controls for the vehicle and data required for executing the programs may be stored in the memory. One or more programs for controls according to the invention, data and one or more maps used for executing the programs are also stored in the memory. The ECU 10 receives data sent from each part of the vehicle via the input/output interface, carries out operations to generate control signals, and sends out the control signals via the input/output interface for controlling each part of the vehicle.

An engine 12 is, for example, a 4-cycle engine equipped with four cylinders. One of the cylinders is schematically illustrated in Figure 1. The engine 12 is connected to an intake manifold 16 through an intake valve 14 and connected to an exhaust manifold 20 through an exhaust valve 18. A fuel injection valve 22 for injecting fuel in accordance with a control signal from the ECU 10 is provided in the intake manifold 16. Alternatively, the fuel injection valve 22 may be provided in a combustion chamber 24.

The engine 12 introduces an air-fuel mixture of the air taken from the intake manifold 16 and the fuel injected from the fuel injection valve 22 into the combustion chamber 24. A spark plug 26 is provided in the combustion chamber 24 to ignite the spark in accordance with an ignition timing signal from the ECU 10. The air-fuel mixture combusts in response to the spark ignited by the spark plug 26. The combustion increases the volume of the air-fuel mixture to push a piston 28 downward. A reciprocal motion of the piston 28 is converted into a rotational motion of a crankshaft 30. In a case of a 4-cycle engine, a cycle of the engine includes four strokes of intake, compression, combustion and exhaust. The piston 28 travels up and down four times in one cycle.

A continuously variable valve actuation mechanism 31 is a mechanism capable of continuously changing a lift amount and a phase (opening/closing timing) of the intake valve 14. In this embodiment, the continuously variable valve actuation mechanism 31 includes a variable lift mechanism 32 and a variable phase mechanism 33.

The variable lift mechanism 32 is a mechanism capable of continuously changing the lift amount of the intake valve 14 in accordance with a control signal from the ECU 10. The variable lift mechanism can be implemented by any known technique. For example, a mechanism implemented with a cam, lift variable link, upper link, and lower link has been proposed (for example, see Japanese Patent Application Laid-Open No. 2004-036560). In this mechanism, the angle of the lower link is changed by, for example, an actuator to control a maximum lift amount of the valve.

The variable phase mechanism 33 is a mechanism capable of continuously changing the phase of the intake valve 14 in accordance with a control signal from the ECU 10. The variable phase mechanism can be implemented by any known technique. For example, a mechanism for electromagnetically advancing and retarding the phase of the intake valve has been proposed (for example, see Japanese Patent Application Laid-Open No. 2000-227033).

Alternatively, the variable lift mechanism 32 and the variable phase mechanism 33 may be integrated into a single unit. The present invention is not limited to these mechanisms that are capable of continuously changing the lift amount and the phase. The present invention is applicable to a mechanism capable of changing the lift amount and the phase in a step-by-step manner.

A crank angle sensor 33 for detecting a rotational angle of the crankshaft 30 of the engine 12 and a cam angle sensor 34 for detecting a rotational angle of a camshaft to which a cam that drives the intake valve of the engine 12 is connected are connected to the ECU 10. Detection values of these sensors are provided to the ECU 10. The crank angle sensor 33 generates one pulse (CRK pulse) every predetermined crank angle degrees (for example, 30 degrees). In response to the pulses, the rotational angle position of the crankshaft 30 can be identified. The cam angle sensor 34 generates a pulse (CYL pulse) at a predetermined crank angle position of a specific cylinder of the engine 12 and a pulse (TDC pulse) at the top dead center (TDC) in the beginning of the intake stroke of each cylinder. These pulses are used for detecting an engine rotational speed NE and determining various control timings such as a fuel injection timing and an ignition timing.

An actual phase CAIN of the camshaft is detected from a relative relation between the TDC pulse outputted from the cam angle sensor 34 and the CRK pulse outputted from the crank angle sensor 33. In this embodiment, for the most retarded phase, the value of CAIN is set to zero. As the phase is advanced, the value of CAIN is larger.

A lift amount sensor 35 for detecting the lift amount LFT of the intake valve 14 is provided in the continuously variable valve actuation mechanism 31, and is connected to the ECU 10. The lift amount sensor 35 can be implemented by any known technique. For example, the sensor 35 may be implemented with a potentiometer. A detection value of the sensor 35 is sent to the ECU 10.

A throttle valve 46 is provided in the intake manifold 16. The throttle valve 46 is a drive-by-wire (DBW) throttle valve that is driven by an actuator (not illustrated in the figure) in accordance with a control signal from the ECU 10.

A throttle valve opening sensor 48, which is attached to the throttle valve 46, provides the ECU 10 with a signal corresponding to an opening degree TH of the throttle valve.

In this embodiment, the amount of intake air into the engine 12 is controlled by controlling the lift amount of the intake valve 14 by the continuously variable valve actuation mechanism 31 while controlling the intake manifold pressure through a control of the opening degree of the throttle valve 46.

An air flow meter 50 is provided upstream of the throttle valve 46 in the intake manifold 16. The air flow meter 50 outputs to the ECU 10 an electric signal indicating the amount of intake air.

An intake manifold pressure sensor 52 and an intake air temperature sensor 54 are provided downstream of the throttle valve 46 in the intake manifold 16 to output to the ECU 10 electric signals indicating an absolute pressure PB inside the intake manifold and a temperature TA of intake air, respectively. An atmospheric pressure sensor 55 is provided at an arbitrary position outside the engine to output to the ECU 10 an electric signal indicating an atmospheric pressure PA. The intake manifold pressure can be expressed in terms of absolute pressure and gauge pressure. The gauge pressure indicates a differential pressure of the intake manifold absolute pressure PB with respect to the atmospheric pressure PA, and is represented by "PA-PB (mmHg)".

An accelerator pedal sensor 56 for detecting an opening degree AP of an accelerator pedal is connected to the ECU 10. The ECU 10 can determine a requested intake air amount based on the accelerator pedal opening degree.

A LAF (linear air-fuel) sensor 60 is provided upstream of a catalyst 58 in the exhaust manifold 20. The LAF sensor 60 outputs to the ECU 10 a signal that is proportional to the concentration of oxygen included in the exhaust gas over a wide range from lean to rich.

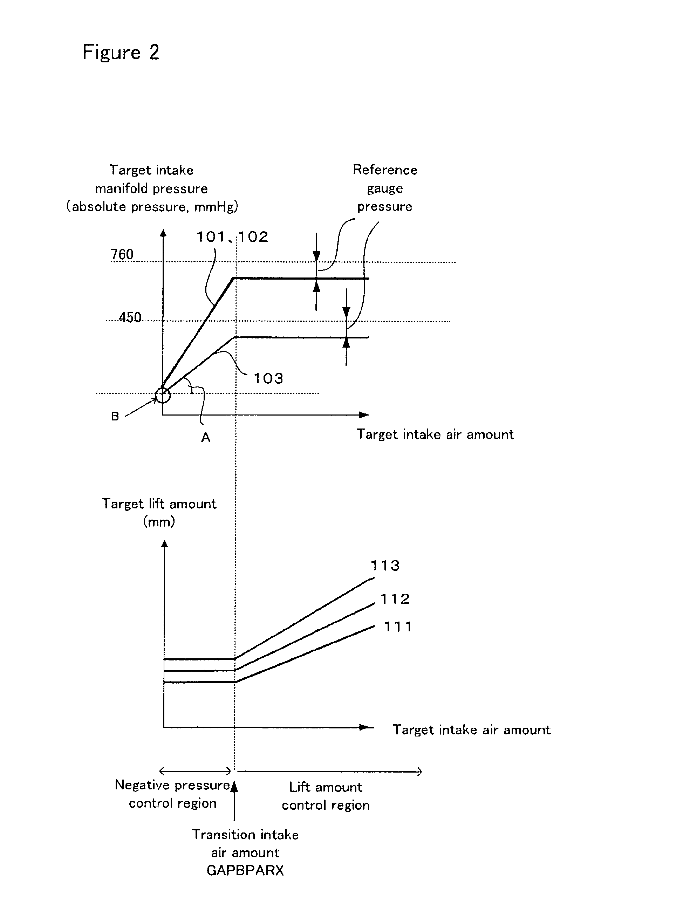

Next, referring to Figure 2, an overview of a control in accordance with one embodiment of the present invention will be described. In the figure, behaviors 101-103 of a target intake manifold pressure (expressed in terms of absolute pressure) and behaviors 111-113 of a target lift amount, with respect to a target intake air amount, are shown as one example. Reference numerals 101 and 111 indicate a case where the intake air temperature is 25 degrees and the atmospheric pressure is 760 mmHg. Reference numerals 102 and 112 indicate a case where the intake air temperature is 50 degrees and the atmospheric pressure is 760 mmHg. Reference numerals 103 and 113 indicate a case where the intake air temperature is 25 degrees and the atmospheric pressure is 450 mmHg. Because the reference numerals 101 and 102 present the same behavior, both are overlapped. In this embodiment, the intake air temperature of 25 degrees is a standard intake air temperature, and the atmospheric pressure of 760 mmHg is a standard atmospheric pressure. A condition of the standard intake air temperature and the standard atmospheric pressure is referred to as a standard condition. Alternatively, a condition of the intake air temperature and(or) the atmospheric pressure having another value may be defined as the standard condition.

According to one embodiment of the present invention, the engine has two control regions. One is a region where the target intake air amount is lower than a predetermined value, which is referred to as a negative pressure control region. In this region, the target intake air amount is achieved by changing the target intake manifold pressure while keeping the target lift amount constant. In the negative pressure control region, the variable valve mechanism 31 is set such that the overlap period (a crank angle period during which both the intake valve and the exhaust valve are open) is less than a predetermined value. For example, the idle operating state can be implemented in the negative pressure control region. The other is a region where the target intake air amount is higher than the predetermined value, which is referred to as a lift amount control region. In this region, the target intake air amount is achieved by changing the target lift amount while keeping the target intake manifold pressure constant at a reference gauge pressure (for example, -100 mmHg). Here, the above predetermined value indicating a switching timing between the negative pressure control region and the lift amount control region is referred to as a transition intake air amount GAPBPARX, which may be determined according to a predetermined condition. In this embodiment, the transition intake air amount is determined based on a lift amount (referred to as a standard lift amount) for achieving the reference gauge pressure under the standard condition. Thus, a timing at which the transition from the negative pressure control region to the lift amount control region is made is determined as being constant independently of the air density. Therefore, the transition of the intake air amount control can be smoothly made according to a requested output of the engine under any environment (for example, a location where the atmospheric pressure is higher than the standard atmospheric pressure).

The target intake manifold pressure that changes in the negative pressure control region is represented by PBGACMD_CHNG. The target intake manifold pressure (reference gauge pressure) in the lift amount control region is represented by PBGACMD_CONST. In the negative pressure control region, the target lift amount is kept constant. Therefore, the target intake manifold pressure can be represented by a firs-order equation for the target intake air amount GAIRCMD, as shown by the equation (1). Here, A is a slope and B is an intercept. In the figure, the slope A and the intercept B for the target intake manifold pressure of reference numeral 103 are shown.

$$\text{PBGACMD\_CHNG} = A \times \text{GAIRCMD} + B \qquad (1)$$

The target lift amount in the negative pressure region is determined under a predetermined condition. If the predetermined condition changes, the value of the target lift amount also changes as shown by reference numerals 111-113. If the value of the target lift amount changes, the behavior of the target intake manifold pressure needs to be changed as shown by reference numerals 101-103. That is, the slope A and the intercept B change according to the value of the target lift amount in the negative pressure control region.

Therefore, in the present invention, the above first-order equation for calculating the target intake manifold pressure is determined by calculating the slope A and the intercept B according to the target lift amount determined in the negative pressure control region. The target intake manifold pressure can be calculated by substituting the target intake air amount (which is an intake air amount requested by the engine, and for example, can be determined in any known method according to the operating state (for example, opening degree of the accelerator pedal) of the engine) into the first-order equation thus determined. According to this technique, because the target intake manifold pressure can be determined by the first-order equation, it is not required that target intake manifold pressures corresponding to various operating states of the engine are previously defined in a map.

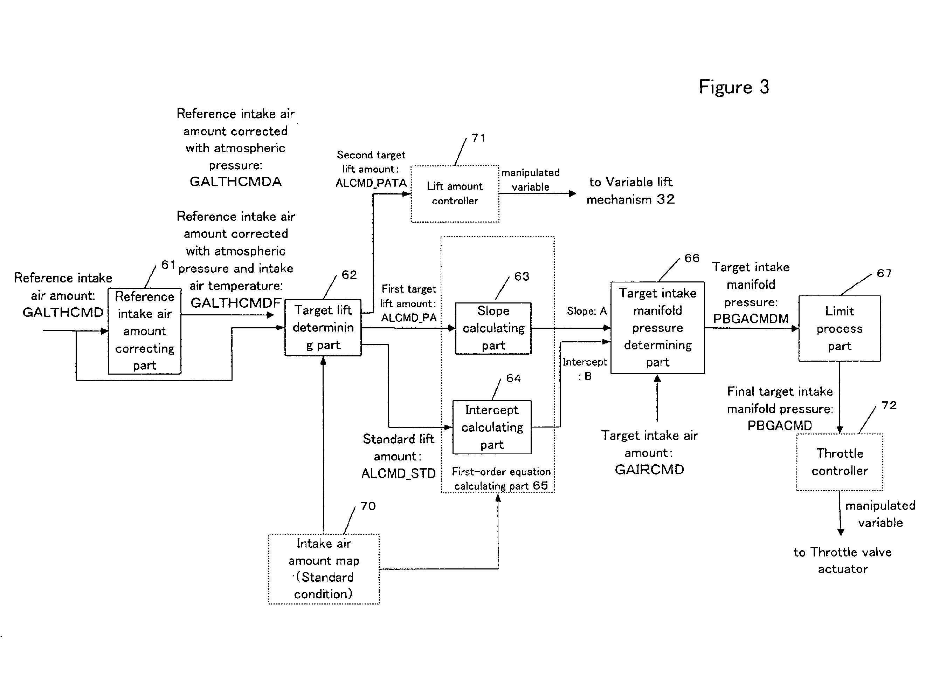

Next, referring to Figure 3, a control apparatus of the internal combustion engine in accordance with one embodiment of the present invention will be described. This control apparatus is implemented in the ECU 10 of Figure 1. More specifically, functions of each functional block are implemented by the CPU of the ECU 10.

A reference intake air amount correcting part 61 density-corrects a reference intake air amount GALTHCMD. The reference intake air amount GALTHCMD is an intake air amount that can be determined according to the idle state (for example, the engine water temperature) of the engine so as to determine the target lift amount in the negative control region described referring to Figure 2. The reference intake air amount GALTHCMD indicates a reference intake air amount under the standard condition of the standard atmospheric pressure PA_STD and the standard intake air temperature TA_STD as described above. The correcting part 61 uses a ratio Kp between an air density $\rho$_STD in the standard condition and an air density $\rho$ in the present condition of the present atmospheric pressure PA and the present intake air temperature TA detected by the PA sensor 55 and TA sensor 54, to convert the reference intake air amount GALTHCMD in the standard condition into a reference intake air amount GALTHCMDA in the present condition.

More specifically, the air density ratio Kp is represented by the equation (2). In this embodiment, the standard atmospheric pressure PA_STD is 760 mmHg, and the standard intake air temperature TA_STD is 25 degrees or 298 K (kelvin). PBGA is the reference gauge pressure, which is -100mmHg in this embodiment. As described above, the reference gauge pressure indicates the target intake manifold pressure in the lift amount control region.

$$K\rho = \frac{\rho\_STD}{\rho} = \frac{PA\_STD + PBGA}{TA\_STD} \times \frac{TA}{PA + PBGA} \qquad (2)$$

In a case where only the present atmospheric pressure PA differs from the standard atmospheric pressure PA_STD and the present intake air temperature TA is equal to the standard intake air temperature TA_STD, the density ratio Kp is represented by the equation (3). The reference intake air amount GALTHCMDA under the present condition can be calculated by multiplying the reference intake air amount GALTHCMD under the standard condition by the density ratio Kp (equation (4)). As seen from the equation, as the present atmospheric pressure is lower, the reference intake air amount GALTHCMDA under the present condition is made larger with respect to the reference intake air amount GALTHCMD under the standard condition. Thus, the reference intake air amount having a desired amount can be calculated independently of the atmospheric pressure.

$$K\rho = \frac{\rho\_STD}{\rho} = \frac{PA\_STD + PBGA}{PA + PBGA} \qquad (3)$$

$$\begin{aligned} GALTHCMDA &= GALTHCMD \times K\rho \\ &= GALTHCMD \times \frac{PA\_STD + PBGA}{PA + PBGA} \end{aligned} \qquad (4)$$

Furthermore, in a case where the present atmospheric pressure PA differs from the standard atmospheric pressure PA_STD and the present intake air temperature TA differs from the standard intake air temperature TA_STD, the air density ratio Kp is represented by the above equation (2). The reference intake air amount GALTHCMDF under the present condition is calculated by multiplying the reference intake air amount GALTHCMD under the standard condition by the density ratio Kp (equation (5)).

$$\begin{aligned} GALTHCMDF &= GALTHCMD \times K\rho \\ &= GALTHCMD \times \frac{PA\_STD + PBGA}{PA + PBGA} \times \frac{TA}{TA\_STD} \end{aligned} \qquad (5)$$

Thus, the reference intake air amount GALTHCMD, the reference intake air amount GALTHCMDA corrected with the atmospheric pressure, and the reference intake air amount GALTHCMDF corrected with the atmospheric pressure and the intake air temperature are passed to the target lift determining part 62.

The target lift determining part 62 determines the target lift amount in the negative pressure control region. In this embodiment, in the negative pressure control region, a settable minimum lift amount (referred to as a minimum lift) under the reference gauge pressure and a predetermined phase in the standard condition of the standard atmospheric pressure and the standard intake air temperature is set in the target lift amount. Here, the reason that the reference gauge pressure is required is so as to smoothly change the target lift amount from the minimum lift when the control is switched to the lift amount control in response to the target intake manifold pressure reaching the reference gauge pressure. Furthermore, in this embodiment, the negative pressure control region is a region where the overlap period is less than a predetermined value as described above. Therefore, the above predetermined phase is a phase required for implementing such overlap period (in this example, such a phase has a value indicating the most retarded angle (for example, zero degree)). Alternatively, a lift amount under the gauge pressure and(or) the phase having another value may be established as the target lift amount in the negative pressure control region.

In order to determine the minimum lift, predetermined intake air amount map 70 is referred to. This map consists of maps defining correlations among the intake air amount, the engine rotational speed, the gauge pressure of the intake manifold, the phase of the intake valve, and the lift amount of the intake valve in the standard condition. These maps are previously stored in a memory of the ECU 10.

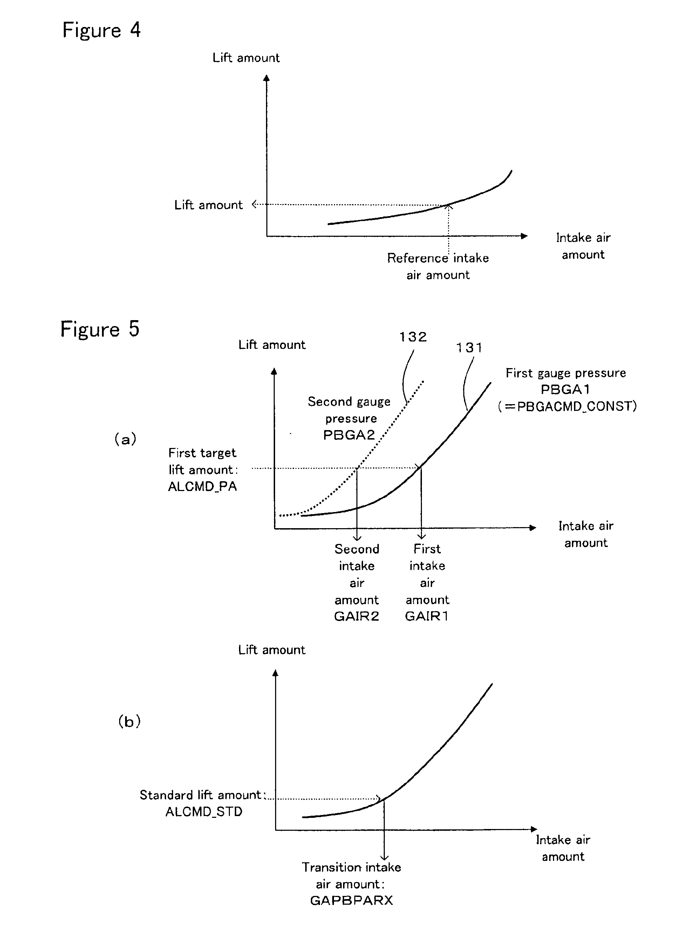

The target lift determining part 62 selects a map corresponding to a target engine rotational speed, the reference gauge pressure and a reference phase. The map thus selected defines an intake air amount for each lift amount when the conditions of the reference gauge pressure, the reference phase and the target engine rotational speed are met under the standard condition. Here, the reference gauge pressure is a gauge pressure PBGACMD_CONST at which the target intake manifold pressure is kept constant in the lift amount control region as described above, which is for example, -100 mmHg. The reference phase is, for example, the most retarded angle (zero degree), which is set so as to make the overlap period smaller in the negative pressure control region as described above. Referring to Figure 4, one example of the selected map is shown.

The target lift determining part 62 refers to the map as shown in Figure 4 based on the reference intake air amount GALTHCMD to determine a corresponding lift amount. The lift amount thus determined is referred to as a standard lift amount ALCMD_STD. As described above, the standard lift amount ALCMD_STD is used for determining the transition intake air amount GAPBPARX.

Furthermore, the target lift determining part 62 refers to the map as shown in Figure 4 based on the reference intake air amount GALTHCMDA corrected with the atmospheric pressure, to determine a corresponding lift amount. The lift amount thus determined is referred to as a first target lift amount ALCMD_PA. Thus, increase and decrease of the intake air amount due to a change of the atmospheric pressure with respect to the standard atmospheric pressure are compensated for by the first target lift amount ALCMD_PA. The first target lift amount ALCMD_PA is passed to the first-order equation calculating part 65 and is used for determining the target intake manifold pressure.

Furthermore, the target lift determining part 62 refers to the map as shown in Figure 4 based on the reference intake air amount GALTHCMDF corrected with the atmospheric pressure and the intake air temperature, to determine a corresponding lift amount. The lift amount thus determined is referred to as a second target lift amount ALCMD_PATA. Thus, increase and decrease of the intake air amount due to changes of the atmospheric pressure and the intake air temperature with respect to the standard atmospheric pressure and the standard intake air temperature are compensated for by the second target lift amount ALCMD_PATA. The second target lift amount ALCMD_PATA is passed to a lift amount controller 71. The lift amount controller 71 can be implemented in the ECU 10. The lift amount controller 71 performs any control method (for example, PI control, response assignment control, etc.) to determine a manipulated variable for causing an actual lift amount detected by the lift amount sensor 35 to converge to the second target lift amount. The manipulated variable is passed to the variable lift mechanism 32. The variable lift mechanism 32 adjusts the lift amount of the intake valve so as to achieve the second target lift amount ALCMD_PATA in the negative pressure control region.

In order to determine the target intake manifold pressure, the first target lift amount ALCMD_PA is used. The reason that the second target lift amount ALCMD_PATA is not used is described later. The target lift amount in Figure 2 as described above indicates the behavior of the second target lift amount ALCMD_PATA, and the target intake manifold pressure in Figure 2 has been determined based on the first target lift amount ALCMD_PA.

The first-order equation calculating part 65 includes a slope calculating part 63 and an intercept calculating part 64. The slope calculating part 63 calculates the slope A in the first-order equation (1) as described above. The slope A can be calculated from two points on a straight line expressing the first-order equation. The slope calculating part 63 selects, from the intake air amount map 70, a map corresponding to the present engine rotational speed detected through the CRK sensor 33, the present phase of the intake valve detected through the CRK sensor 33 and CAM sensor 34, and the reference gauge pressure PBGA1 (=PBGACMD_CONST). One example of the selected map is shown by reference numeral 131 in Figure 5. The slope calculating part 63 refers to the map based on the first target lift amount ALCMD_PA to determine a corresponding first intake air amount GAIR1.

The slope calculating part 63 further selects a map corresponding to the present engine rotational speed, the present phase, and a gauge pressure that differs from the reference gauge pressure (for example, -500 mmHg, which is represented by PBGA2). One example of the selected map is shown by reference numeral 132 in Figure 5. The slope calculating part 63 refers to the map based on the first target lift amount ALCMD_PA to determine a corresponding second intake air amount GAIR2. Thus, the first and second intake air amounts GAIR1 and GAIR2 corresponding to the first and second gauge pressures PBGA1 and PBGA2, respectively, are determined.

Because two points on the straight line expressing the above first-order equation (1) are determined, the slope A can be calculated as shown by the equation (6). The reason that the standard atmospheric pressure PA_STD is added in the equation is so as to convert into an absolute pressure value.

$$A = \frac{(PA\_STD + PBGA1) - (PA\_STD + PBGA2)}{(GAIR1 - GAIR2)} \qquad (6)$$

The intercept calculating part 64 calculates the intercept B in the above first-order equation (1), As described referring to Figure 2, the target intake manifold pressure reaches the reference gauge pressure PBGACMD_CONST at the transition intake air amount GAPBPARX. Therefore, the intercept B can be calculated by the following equation (7). The reason that the atmospheric pressure PA (which can be detected by the atmospheric pressure sensor 55) is added is so as to convert into an absolute pressure value.

$$B = (PA + PBGACMD\_CONST) \cdot A \times GAPBPARX \qquad (7)$$

As described above, the transition intake air amount GAPBPARX is determined based on the standard lift amount ALCMD_STD for achieving the reference gauge pressure under the standard condition. Therefore, the transition intake air amount GAPBPARX can be determined by determining an intake air amount corresponding to the standard lift amount ALCMD_STD from a map. More specifically, the intercept calculating part 64 selects a map corresponding to the present engine rotational speed, the present phase, and the reference gauge pressure. One example of the map is shown in Figure 5(b). The intercept calculating part 64 refers to the map based on the standard lift amount ALCMD_STD to determine a corresponding reference intake air amount GAPBPARX.

Thus, because the slope A and the intercept B are determined, the above first-order equation is determined.

A target intake manifold pressure determining part 66 calculates a target intake manifold pressure PBGACMDM (corresponding to PBGACMD_CHGN in the negative pressure control region) according to the following equation (8).

$$PBGACMD = A \times GAIRCMD + B \cdot PA \qquad (8)$$

The equation (8) is similar to the above first-order equation (1). However, the atmospheric pressure PA detected by the atmospheric pressure sensor 55 is subtracted so as to convert into a gauge pressure value. The reason for converting into an gauge pressure value is that the following limit process uses the reference gauge pressure.

A limit process part 67 limits the target intake manifold pressure PBGACMDM with the reference gauge pressure to determine a final target intake manifold pressure PBGACMD. Thus, the target intake manifold pressure PBGACMD is controlled in such a manner that the target intake manifold pressure PBGACMD does not exceed the reference gauge pressure. As a result, as described referring to Figure 2, the target intake manifold pressure PBGACMD is kept at the reference gauge pressure after the target intake air amount GAIRCMD exceeds the transition intake air amount GAPBPARX, that is, in the lift amount control region.

The target intake manifold pressure PBGACMD thus determined is passed to a throttle controller 72. The throttle controller 72 can be implemented in the ECU 10. The throttle controller 72 performs any control method (for example, PI control, response assignment control, etc.) to determine a manipulated variable for causing an actual intake manifold pressure to converge to the target intake manifold pressure. The manipulated variable is passed to an actuator (not shown in the figure) of the throttle valve. The actuator adjusts the opening degree of the throttle valve 46 according to the manipulated variable.

In the lift amount control region, although the target intake manifold pressure is controlled to be kept at the reference gauge pressure by the above limit process, the target lift amount may be controlled by any appropriate technique. For example, by using a similar method to the negative pressure control region as described above, that is, by referring to the intake air amount map 70 based on the reference intake air amount GALTHCMDF corrected with the atmospheric pressure and the intake air temperature, a corresponding target lift amount may be determined.

Next, the reason that the second target lift amount determined based on the reference intake air amount GALTHCMDF corrected with the atmospheric pressure and the intake air temperature is not used for determining the target intake manifold pressure will be described.

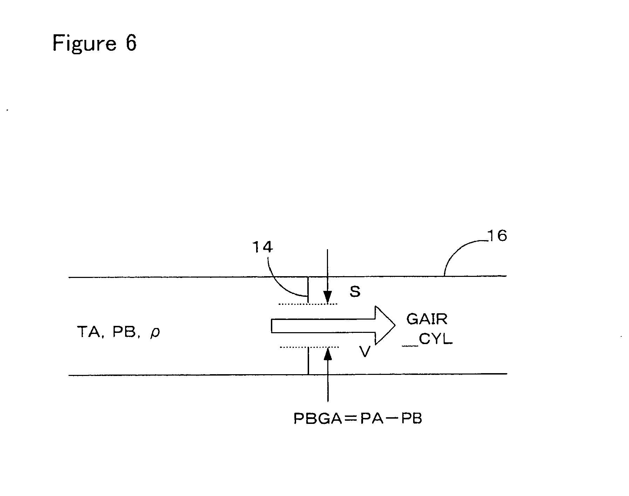

Figure 6 shows a model of the intake valve 14. Let an opening area (which can be represented by the lift amount) of the intake valve 14 be S, through which air flows at a flow speed V toward into the cylinder of the engine. PB is a pressure (absolute pressure) inside the intake manifold 16. TA is a temperature inside the intake manifold 16. GAIR_CYL indicates an amount of air passing through the valve 14 per unit time, which is represented by the following equation (9).

$$GAIR\_CYL = \rho \cdot V \cdot S \qquad (9)$$

On the other hand, the ideal gas equation is represented by $PB = \rho RT$ (R is a gas constant). Therefore, the equation (9) is transformed into the equation (10).

$$PB = \frac{R \cdot TA}{VS} GAIR\_CYL$$

$$GAIR\_CYL = \frac{PB}{R \cdot TA} V \cdot S \qquad (10)$$

The aim is to implement a desired GAIR_CYL by the intake manifold pressure PB and the lift amount S. Here, it is assumed that the flow speed V is constant independently of the lift amount S (in a lower lift region, because the neighborhood of the valve is choked, the flow speed can be assumed as constant at almost the velocity of sound). If the atmospheric pressure is decreased, PB is also decreased. Therefore, S needs to be increased so as to implement the desired GAIR_CYL. In other words, when the atmospheric pressure changes, S is controlled so as to implement GAIR_CYL. As a result, as shown in the negative pressure control region in Figure 2, if the atmospheric pressure becomes lower, the target intake manifold pressure is decreased while the target lift amount is increased.

On the other hand, when the intake air temperature TA becomes higher, the lift amount S needs to be increased so as to implement the desired GAIR_CYL. Therefore, as shown in Figure 2, the target lift amount is increased if the intake air temperature becomes higher. As a result, because S is increased corresponding to an increased amount of TA, PB is constant. That is, the intake manifold pressure does not change. Here, it is assumed that the flow speed V is constant independently of the lift amount S as described above. Therefore, as shown by reference numerals 101 and 102 of Figure 2, the target intake manifold pressures are overlapped even if the intake air temperature changes. Thus, even if the intake air temperature changes, such change in the intake air temperature is compensated for by the lift amount, and hence the intake manifold pressure does not need to be changed. Therefore, in order to determine the target intake manifold pressure, the first target lift amount ALCMD_PA is used. The second target lift amount ALCMD_PATA does not need to be used.

Thus, according to the present invention, in response to a given target intake air amount, the target intake manifold pressure can be determined by using the first-order equation. It is not required to previously define and store the target intake manifold pressure in a map. Only by storing a map for the standard condition, the target intake manifold pressure for the present atmospheric pressure and the present intake air temperature can be determined. Previously creating maps for each value of the atmospheric pressure and each value of the intake air temperature for various conditions other than the standard condition is not required. The number of man-hours for creating maps can be reduced while the amount of data to be stored in the control apparatus can be reduced.

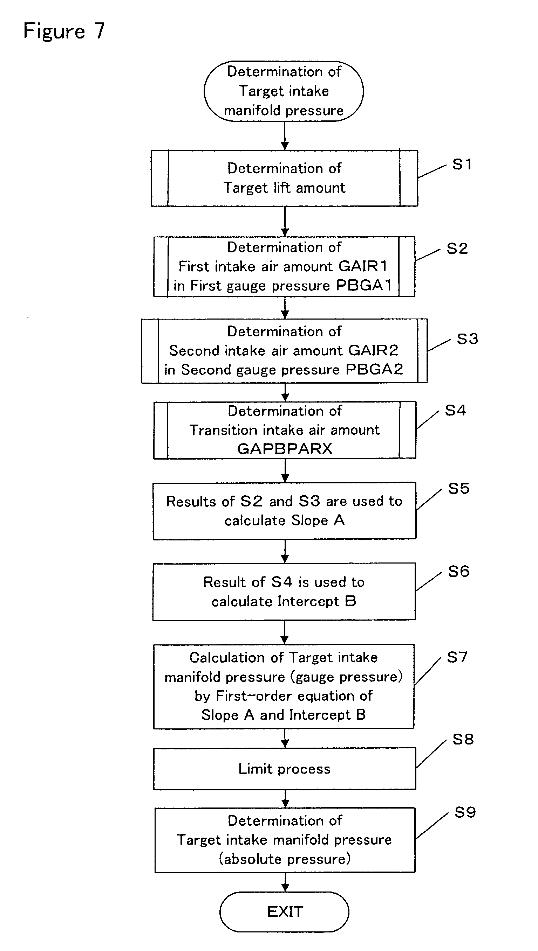

Figure 7 is a control flow for determining a target intake manifold pressure, in accordance with one embodiment of the present invention. The control flow can be executed by the CPU of the ECU 10 at predetermined time intervals (for example, in synchronization with a TDC signal).

In step S1, the standard lift amount ALCMD_STD, the first target lift amount ALCMD_PA and the second target lift amount ALCMD_PATA are determined. Steps S2 and S3 are for calculating the slope A of the first-order equation (1) as described above. In step S2, the first intake air amount GAIR1 in the first gauge pressure PBGA 1 is determined. In step S3, the second intake air amount GAIR2 in the second gauge pressure PBGA2 is determined. In step S4, the transition intake air amount GAPBPARX at which the negative pressure control region is switched to the lift amount control region is determined.

In step S5, the first intake air amount GAIR1 in the first gauge pressure PBGA1 determined in step S2 and the second intake air amount GAIR2 in the second gauge pressure PBGA2 determined in step S3 are used to calculate the slope according to the equation (6) as described above.

In step S6, the transition intake air amount GAPBPARX determined in step S4 is used to calculate the intercept B according to the equation (7) as described above. In step S7, according to the equation (8) including the slope A and the intercept B determined in steps S5 and S6, the target intake manifold pressure PBGACMDM is calculated.

In step S8, the target intake manifold pressure PBGACMDM is limited with the reference gauge pressure to determine the final target intake manifold pressure PBGACMD. As described above, the reference gauge pressure is a value of the target intake manifold pressure kept in the lift amount control region. Therefore, the target intake manifold pressure can be controlled to be kept at the reference gauge pressure after reaching the reference gauge pressure at the transition intake air amount.

In step S9, the atmospheric pressure PA detected by the atmospheric pressure sensor 55 is added to the final target intake manifold pressure PBGACMD so as to express the final intake air manifold pressure PBGACMD in terms of absolute pressure value, which is passed to the throttle controller. Alternatively, the final target intake manifold pressure PBGACMD expressed in terms of gauge pressure value may be passed to the throttle controller. In such a case, the step S9 is not required.

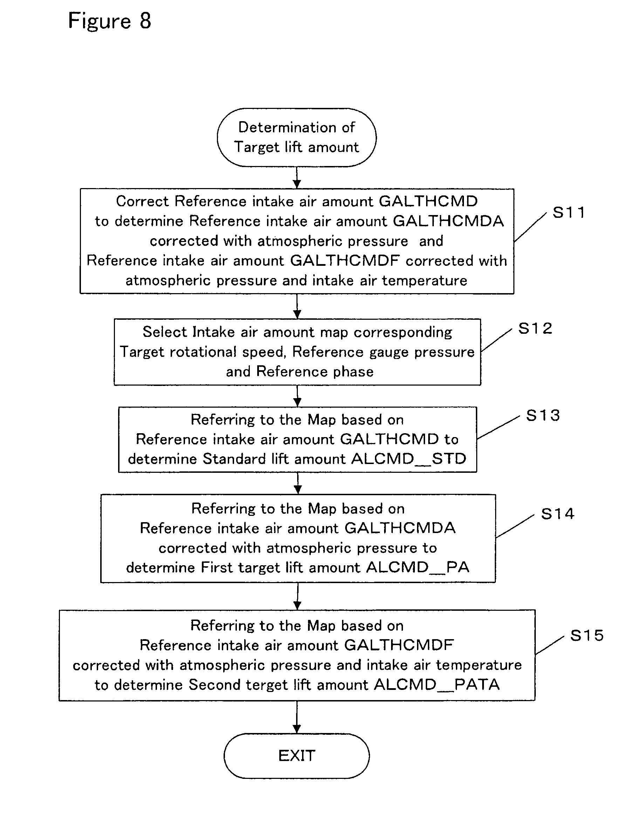

Figure 8 shows a flow of the process in step S1 of Figure 7. In step S11, the reference intake air amount GALTHCMD is corrected according to the equation (4) as described above to calculate the reference intake air amount GALTHCMDA corrected with the atmospheric pressure. The reference intake air amount GALTHCMD is corrected according to the equation (5) as described above to calculate the reference intake air amount GALTHCMDF corrected with the atmospheric pressure and the intake air temperature.

In step S12, an intake air amount map corresponding to a target engine rotational speed (which may be determined according to, for example, an opening degree of the accelerator pedal), the reference gauge pressure and the reference phase is selected. As described above, the reference phase is, for example, the most retarded phase.

In step S13, the selected map is referred to based on the reference intake air amount GALTHCMD to determine the standard lift amount ALCMD_STD. In step S14, the selected map is referred to based on the reference intake air amount GALTHCMDA corrected with the atmospheric pressure to determine the fist target lift amount ALCMD_PA. In step S15, the selected map is referred to based on the reference intake air amount GALTHCMDF corrected with the atmospheric pressure and the intake air temperature to determine the second target lift amount ALCMD_PATA. The lift amount determined in Step S15 is passed to the lift controller to control the lift amount of the intake vale to converge to the second target lift amount.

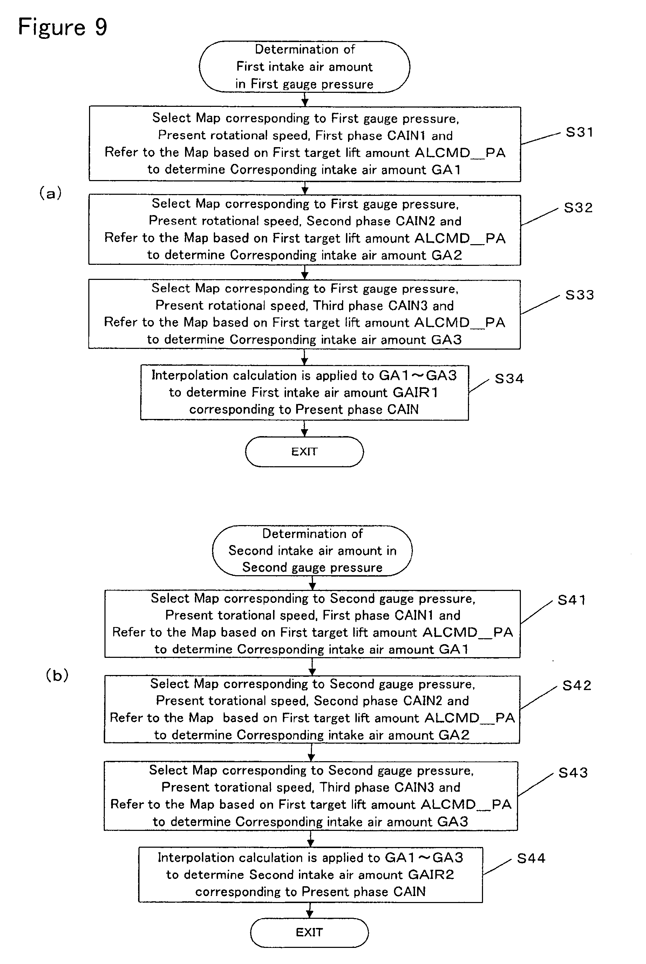

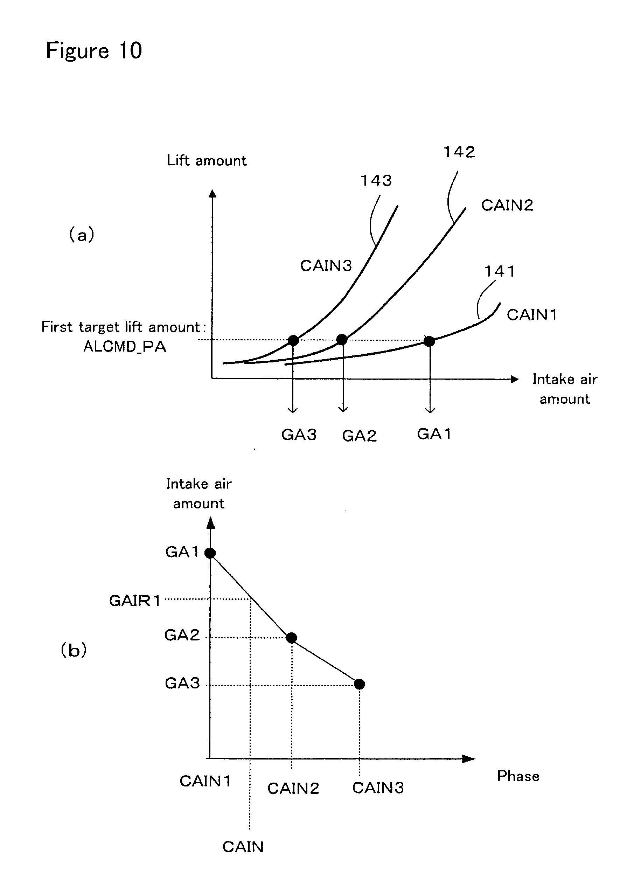

Figure 9 shows a flow of the process executed in step S2 of Figure 7. As described above, the intake air amount map 70 defines an intake air amount for each engine rotational speed, each phase, each gauge pressure, and each lift amount. First, a map corresponding to the reference gauge pressure, the first target lift amount ALCMD_PA and the detected present engine rotational speed is selected. The selected map is a map defining an intake air amount for each phase. One example of this map is shown in Figure 10(a). In this example, a relationship between the intake air amount and the lift amount is defined for each of a first phase CAIN1 (for example, 0 degree), a second phase CAIN2 (for example, 30 degrees) and a third phase CAIN3 (for example, 55 degrees). In step S31, a map 141 for the first phase CAIN1 is selected to determine a first intake air amount GA1 corresponding to the first target lift amount ALCMD_PA. In step S32, a map 142 for the second phase CAIN2 is selected to determine a second intake air amount GA2 corresponding to the first target lift amount ALCMD_PA. In step S33, a map 143 for the third phase CAIN3 is selected to determine a third intake air amount GA3 corresponding to the first target lift amount ALCMD_PA.

If the intake air amounts thus determined are plotted, Figure 10(b) is obtained. In order to determine a reference intake air amount corresponding to the detected present phase CAIN, interpolation calculation is made. For example, as shown in the figure, if the present phase CAIN is between the first phase CAIN1 and the second phase CAIN2, the first intake air amount GAIR1 corresponding to the present phase CAIN can be calculated using the linear interpolation, as shown by the following equation.

$$ GAIR1 = \frac{GA1 - GA2}{CAIN1 - CAIN2} \times (CAIN - CAIN1) + GA1 \qquad (11) $$

In this example, three phase values are used. However, the number of phase values to be used is not limited to three. Any number of phase values may be defined in the maps.

Figure 9(b) shows a flow of the process executed in step S3 of Figure 7. Figure 9(b) differs from Figure 9(a) in that a map corresponding to a second gauge pressure that is different from the reference gauge pressure is selected. A manner for determining the second intake air amount GAIR2 corresponding to the present phase CAIN is the same and hence description thereof is omitted.

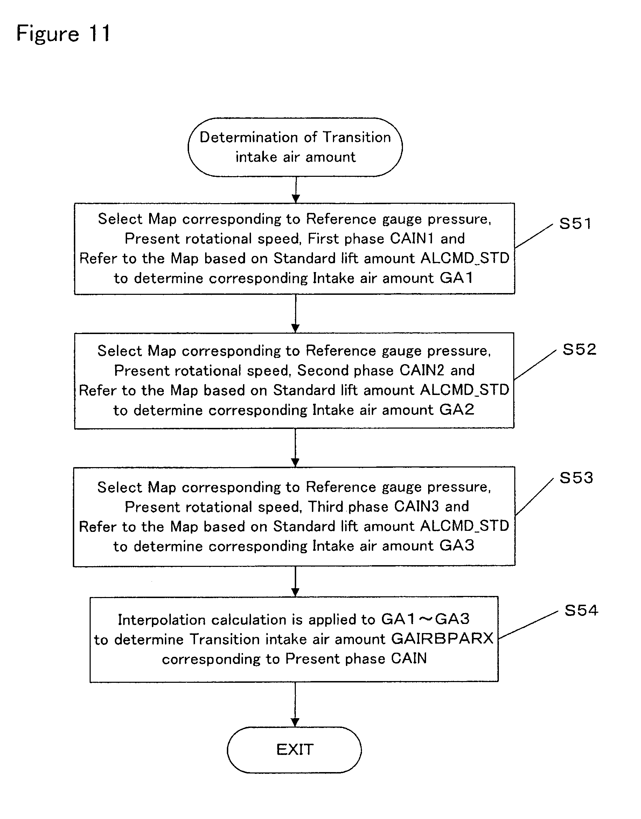

Figure 11 shows a flow of the process executed in step S4 of Figure 7. The process differs from Figure 9(a) in that a lift amount used for referring to a map is the standard lift amount ALCMD_STD. The manner for determining the transition intake air amount GAPBPARX corresponding to the present phase CAIN is the same and hence description thereof is omitted.

The present invention should not be limited to the foregoing description of the embodiments and may be taken into practice by adding various modifications to the foregoing embodiments without departing from the gist of the invention.

**Claims**

**1.** A control apparatus (10) for determining a target intake manifold pressure (PBGACMD_CHNG) in an internal combustion engine(12) that comprises a variable valve actuation mechanism (31) for adjusting a lift amount (ALCMD) of an intake valve (14) and implements a first operating region in which a target intake air amount (GAIRCMD) is achieved by changing the target intake manifold pressure (P8GACMD_CHNG) while keeping a target lift amount (ALCMD) constant, wherein, following the first operating region, a second operating region is implemented in which the target intake air amount (GAIRCMD) is higher than the target air amount (GAIRCMD) of the first operating region and is achieved by changing the target lift amount (ALCMD) while keeping the target intake manifold pressure (PBGACMD_CHNG) at a predetermined gauge pressure (PBGACMD_CONST), comprising:

target lift amount determining means (62) for determining the target lift amount (ALCMD) in the first operating region based on a reference intake air amount (GALTHCMD) determined according to an operating state of the internal combustion engine (12);

means for representing the target intake manifold pressure (PBGACMD_CHNG) in the first operating region by a first order equation which is a function depending on the target intake air amount (GAIRCMD) and determining the first order equation by calculating a slope (A) and an intercept (B) of the function based on the target lift amount (ALCMD); and

means (66) for calculating the target intake manifold pressure (PBGACMD_CHNG) in the first operating region by inserting the target intake air amount (GAIRCMD), which is requested by the internal combustion engine (12) according to the operating state, in the first order equation thus determined.

2. The control apparatus (10) of claim 1,
   wherein
   the apparatus further comprises:

storing means (10) for storing one or more maps defining correlations among an intake air amount (GAIR), a rotational speed of the internal combustion engine, a gauge pressure (PBGA) of the intake manifold, a phase (CAIN) of the intake valve (14), and a lift amount (ALCMD) of the intake valve (14) under a standard condition of a standard atmospheric pressure (PA_STD) and a standard intake air temperature (TA_STD); and

means (61) for correcting the reference intake air amount (GALTHCMD) under the standard condition in such a manner as to indicate a reference intake air amount (GALTHCMDA) under a present atmospheric pressure (PA),

wherein the target lift amount determining means (62) selects, from the storing means, a map corresponding to a target rotational speed of the internal combustion engine (12), the predetermined gauge pressure (PBGACMD_CONST) and a predetermined phase and determines the target lift amount (ALCMD) by referring to the selected map based on the reference intake air amount (GALTHCMDA) under the present atmospheric pressure (PA).

3. The control apparatus (10) of claim 2, further comprising:

means for selecting, from the storing means (10), a map corresponding to a detected rotational speed of the internal combustion engine (12), a detected phase of the intake valve (14), and the predetermined gauge pressure (PBGACMD_CONST) and determining a first intake air amount (GAIR1) by referring to the selected map based on the target lift amount (ALCMD);

means for selecting, from the storing means, a map corresponding to the detected rotational speed of the internal combustion engine, the detected phase of the intake valve (14), and a second gauge pressure (PBGA2) that differs from the predetermined gauge pressure (PBGACMD_CONST) and determining a second intake air amount (GAIR2) by referring to the selected map based on the target lift amount (ALCMD); and

means (63) for calculating the slope (A) based on the first intake air amount (GAIR1) corresponding to the predetermined gauge pressure (PBGACMD_CONST) and the second intake air amount (GAIR1) corresponding to the second gauge pressure (PBGA2).

4. The control apparatus (10) of claim 3, further comprising:

means for selecting, from the storing means, a map corresponding to the target rotational speed of the internal combustion engine (12), the predetermined gauge pressure (PBGACMD_CONST) and a predetermined phase and determining a standard lift amount (ALCMD_STD) by referring to the selected map based on the reference intake air amount (GALTHCMD) under the standard condition;

means for selecting, from the storing means, a map corresponding to the detected rotational speed of the internal combustion engine (12), the detected phase of the intake valve (14) and the predetermined gauge pressure (PBGACMD_CONST) and determining a transition intake air amount (GAPBPARX) at a transition from the first operating region to the second operating region by referring to the selected map based on the standard lift amount (ALCMD_STD); and

means (64) for calculating the intercept (B) based on the slope (A) and the transition intake air amount (GAPBPARX).

**5.** The control apparatus (10) of any one of claims 1 through 4, further comprising:

means (67) for limiting the target intake manifold pressure (PBGACMDM_CHNG) such that the target intake manifold pressure (PBGACMDM_CHNG) does not exceed the predetermined gauge pressure (P8GACMD_CONST).

**6.** The control apparatus (10) of claim 2, further comprising:

means (61) for correcting the reference intake air amount (GALTHCMD) under the standard condition in such a manner as to indicate a reference intake air amount (GALTHCMDF) under a present atmospheric pressure (PA) and a present intake air temperature (TA);
means for selecting, from the storing means, a map corresponding to the target rotational speed of the internal combustion engine (12), the predetermined gauge pressure (PBGACMD_CONST) and the predetermined phase and determining a second target lift amount (ALCMD_PATA) by referring to the selected map based on the reference intake air amount (GALTHCMDF) under the present atmospheric pressure (PA) and the present intake air temperature (TA); and
means (71) for operating the variable valve actuation mechanism (31) according to the second target lift amount (ALCMD_PATA).

**7.** A method for determining a target intake manifold pressure (PBGACMD_CHNG) in an internal combustion engine (12) that comprises a variable valve actuation mechanism (31) for adjusting a lift amount (ALCMD) of an intake valve (14) and implements a first operating region in which a target intake air amount (GAIRCMD) is achieved by changing the target intake manifold pressure (PBGACMD_CHNG) while keeping a target lift amount (ALCMD) constant, wherein, following the first operating region, a second operating region is implemented in which the target intake air amount (GAIRCMD) is higher than the target air amount (GAIRCMD) of the first operating region and is achieved by changing the target lift amount (ALCMD) while keeping the target intake manifold pressure (PBGACMD_CHNG) at a predetermined gauge pressure (PBGACMD_CONST), comprising the steps of:

determining (S1) the target lift amount (ALCMD) in the first operating region based on a reference intake air amount (GALTHCMD) determined according to an operating state of the internal combustion engine(12);
representing the target intake manifold pressure (P8GACMD_CHNG) in the first operating region by a first order equation which is a function depending on the target intake air amount (GAIRCMD) and determining the first-order equation by calculating (S5, S6) a slope (A) and an intercept (B) of the function based on the target lift amount (ALCMD); and
calculating (S7) the target intake manifold pressure (PBGACMD_CHNG) in the first operating region by inserting the target intake air amount (GAIRCMD), which is requested by the internal combustion engine (12) according to the operating state, in the first order equation thus determined.

**8.** The method of claim 7,
wherein one or more maps defining correlations among an intake air amount (GAIR), a rotational speed of the internal combustion engine, a gauge pressure (PBGA) of the intake manifold, a phase (CAIN) of the intake valve (14), and a lift amount of the intake valve (ALCMD) under a standard condition of a standard atmospheric pressure (PA_STD) and a standard intake air temperature (TA_STD) are stored in a storage device,
the method further comprising correcting (S11) the reference intake air amount (GALTHCMD) under the standard condition in such a manner as to indicate a reference intake air amount (GALTHCMDA) under a present atmospheric pressure (PA),
wherein the step (S1) of determining the target lift amount (ALCMD) includes selecting (S12), from the storage device, a map corresponding to a target rotational speed of the internal combustion engine, the predetermined gauge pressure (PBGACMD_CONST) and a predetermined phase and determining (S14) the target lift amount (ALCMD_PA) by referring (S13) to the selected map based on the reference intake air amount (GAL THCMDA) under the present atmospheric pressure (PA).

**9.** The method of claim 8, further comprising:

selecting, from the storage device, a map corresponding to a detected rotational speed of the internal combustion engine (12), a detected phase of the intake valve (14), and the predetermined gauge pressure (PBGACMD_CONST) and determining (S2) a first intake air amount (GAIR1) by referring to the selected map based on the target lift amount (ALCMD_PA);

selecting, from the storage device, a map corresponding to the detected rotational speed of the internal combustion engine (12), the detected phase of the intake valve (14), and a second gauge pressure (PBGA2) that differs from the predetermined gauge pressure (PBGACMD_CONST) and determining (S3) a second intake air amount (GAIR2) by referring to the selected map based on the target lift amount (ALCMD); and

calculating (S5) the slope (A) based on the first intake air amount (GAIR1) corresponding to the predetermined gauge pressure (PBGACMD_CONST) and the second intake air amount (GAIR2) corresponding to the second gauge pressure (PBGA2).

10. The method of claim 9, further comprising:

selecting, from the storage device, a map corresponding to the target rotational speed of the internal combustion engine (12), the predetermined gauge pressure (PBGACMD_CONST) and a predetermined phase and determining (S13) a standard lift amount (ALCMD_STD) by referring to the selected map based on the reference intake air amount (GALTHCMD) under the standard condition;

selecting, from the storage device, a map corresponding to the detected rotational speed of the internal combustion engine (12), the detected phase of the intake valve (14) and the predetermined gauge pressure (PBGACMD_CONST) and determining (S4) a transition intake air amount (GAPBPARX) at a transition from the first operating region to the second operating region by referring to the selected map based on the standard lift amount (ALCMD_STD); and

calculating (S6) the intercept (B) based on the slope (A) and the transition intake air amount (ALCMD_STD).

11. The method of any one of claims 7 through 10, further comprising limiting (S8) the target intake manifold pressure (PBGACMDM_CHNG) such that the target intake manifold pressure (PBGACMDM_CHNG) does not exceed the predetermined gauge pressure (PBGACMD_CONST).

12. The method of claim 8, further comprising:

correcting (S11) the reference intake air amount (GALTHCMD) under the standard condition in such a manner as to indicate a reference intake air amount (GALTHCMDF) under a present atmospheric pressure (PA) and a present intake air temperature (TA);

selecting (S12), from the storage device, a map corresponding to the target rotational speed of the internal combustion engine (12), the predetermined gauge pressure (PBGACMD_CONST) and the predetermined phase and determining a second target lift amount (ALCMD_PATA) by referring(S15) to the selected map based on the reference intake air amount (GALTHCMDF) under the present atmospheric pressure (PA) and the present intake air temperature (TA); and

operating the variable valve actuation mechanism (31) according to the second target lift amount (ALCMD_PATA).

**Patentansprüche**

1. Regelungs-/Steuerungsvorrichtung (10) zum Bestimmen eines Zielansaugkrümmerdruckes (PBGACMD_CHNG) in einem Verbrennungsmotor (12), welcher einen variablen Ventilbetätigungsmechanismus (31) zum Einstellen eines Hubbetrags (ALCMD) eines Ansaugventils (14) umfasst und einen ersten Betriebsbereich implementiert, in welchem ein Zielansaugluftbetrag (GAIRCMD) erzielt wird, indem der Zielansaugkrümmerdruck (PBGACMD_CHNG) geändert wird, während ein Zielhubbetrag (ALCMD) konstant gehalten wird, wobei nach dem ersten Betriebsbereich ein zweiter Betriebsbereich implementiert ist, in welchem der Zielansaugluftbetrag (GAIRCMD) höher als der Zielluftbetrag (GAIRCMD) des ersten Betriebsbereichs ist und welcher dadurch erreicht wird, dass der Zielhubbetrag (ALCMD) geändert wird, während der Zielansaugkrümmerdruck (PBGACMD_CHNG) bei einem vorbestimmten Manometerdruck (PBGACMD_CONST) gehalten wird, umfassend:

Bestimmungsmittel (62) für einen Zielhubbetrag zum Bestimmen des Zielhubbetrags (ALCMD) in dem ersten Betriebsbereich auf Grundlage eines Referenzansaugluftbetrags (GALTHCMD), welcher gemäß einem Betriebszustand des Verbrennungsmotors (12) bestimmt wird;

Mittel zum Darstellen des Zielansaugkrümmerdruckes (PBGACMD_CHNG) in dem ersten Betriebsbereich durch eine Gleichung erster Ordnung, welche eine Funktion ist, die von dem Zielansaugluftbetrag (GAIRCMD) abhängig ist, und zum Bestimmen der Gleichung erster Ordnung durch Berechnung einer Steigung (A) und eines Achsenabschnitts (B) der Funktion auf Grundlage des Zielhubbetrages (ALCMD); und
Mittel (66) zum Berechnen des Zielansaugkrümmerdruckes (PBGACMD_CHNG) in dem ersten Betriebsbereich, indem der Zielansaugluftbetrag (GAIRCMD), welcher durch den Verbrennungsmotor (12) entsprechend dem Betriebszustand angefordert wird, in der somit bestimmten Gleichung erster Ordnung eingesetzt wird.

2. Regelungs-/Steuerungsvorrichtung (10) nach Anspruch 1,
wobei
die Vorrichtung ferner umfasst:

Speichermittel (10) zum Speichern von einer oder mehreren Karten, die Korrelationen zwischen einem Ansaugluftbetrag (GAIR), einer Drehgeschwindigkeit des Verbrennungsmotors, einem Manometerdruck (PBGA) des ansaugkrümmers, einer Phase (CAIN) des Ansaugventils (14) und einem Hubbetrag (ALCMD) des Ansaugventils (14) unter einer Normalbedingung eines normalen atmosphärischen Drucks (TA_STD); und einer normalen Ansauglufttemperatur (PA_STD) definiert; und
Mittel (61) zum Korrigieren des Referenzansaugluftbetrages (GALTHCMD) unter der Normalbedingung, auf solche Weise, um einen Referenzansaugluftbetrag (GALTHCMDA) unter einem normalen atmosphärischen Druck (PA) anzugeben,
wobei die Bestimmungsmittel (62) für einen Zielluftbetrag aus den Speichermitteln eine Karte auswählen, die einer Zieldrehgeschwindigkeit des Verbrennungsmotors (12) entspricht, den vorbestimmten Manometerdruck (PBGACMD_CONST) und eine vorbestimmte Phase auswählen und den Zielhubbetrag (ALCMD) bestimmen, indem sie sich auf die ausgewählte Karte beziehen, basierend auf dem Referenzansaugluftbetrag (GALTHCMDA) unter dem aktuellen atmosphärischen Druck (PA).

3. Regelungs-/Steuerungsvorrichtung (10) nach Anspruch 2, ferner umfassend:

Mittel zum Auswählen aus den Speichermitteln (10) einer Karte, die einer detektierten Drehgeschwindigkeit des Verbrennungsmotors (12) entspricht, einer detektierten Phase des Ansaugventils (14) und dem vorbestimmten Manometerdruck (PBGACMD_CONST) und zum Bestimmen eines ersten Ansaugluftbetrages (GAIR1) durch Bezugnahme auf die ausgewählte Karte basierend auf den Zielhubbetrag (ALCMD);
Mittel zum Auswählen aus den Speichermitteln einer Karte, die der detektierten Drehgeschwindigkeit des Verbrennungsmotors, der detektierten Phase des Ansaugventils (14) und einem zweiten Manometerdruck (PBGA2) entspricht, welcher von dem vorbestimmten Manometerdruck (PBGACMD_CONST) verschieden ist, und zum Bestimmen eines zweiten Ansaugluftbetrages (GAIR2) durch Bezugnahme auf die ausgewählte Karte basierend auf dem Zielhubbetrag (ALCMD); und
Mittel (63) zum Berechnen der Steigung (A) auf Grundlage des ersten Ansaugluftbetrages (GAIR1), welcher dem vorbestimmten Manometerdruck (PBGACMD_CONST) entspricht und des zweiten Ansaugluftbetrages (GAIR1), welcher dem zweiten Manometerdruck (PBGA2) entspricht.

4. Regelungs-/Steuerungsvorrichtung (10) nach Anspruch 3, ferner umfassend:

Mittel zum Auswählen aus den Speichermitteln einer Karte, die der Zieldrehgeschwindigkeit des Verbrennungsmotors (12), dem vorbestimmten Manometerdruck (PBGACMD_CONST) und einer vorbestimmten Phase entspricht und zum Bestimmen eines normalen Hubbetrags (ALCMD_STD) durch Bezugnahme auf die ausgewählte Karte basierend auf den Referenzansaugluftbetrag (GALTHCMD) unter der Normalbedingung;
Mittel zum Auswählen aus den Speichermitteln einer Karte, die der detektierten Drehgeschwindigkeit des Verbrennungsmotors (12), der detektierten Phase des Ansaugventils (14) und dem vorbestimmten Manometerdruck (PBGACMD_CONST) entspricht und zum Bestimmen eines Übergangsansaugluftbetrages (GAPBPARX) an einem Übergang von dem ersten Betriebsbereich zu dem zweiten Betriebsbereich durch Bezugnahme auf die ausgewählte Karte basierend auf dem Normalhubbetrag (ALCMD_STD); und
Mittel (64) zum Berechnen des Achsenabschnitts (B) auf Grundlage der Steigung (A) und des Übergangsansaugluftbetrages (GAPBPARX).

5. Regelungs-/Steuerungsvorrichtung (10) nach einem der Ansprüche 1 bis 4, ferner umfassend:

Mittel (67) zum Beschränken des Zielansaugkrümmerdrucks (PBGACMDM_CHNG), so dass der Zielansaugluftkrümmerdruck (PBGACMDM_CHNG) den vorbestimmten Manometerdruck (PBGACMDM_CONST) nicht übersteigt.

6. Regelungs-/Steuerungsvorrichtung (10) nach Anspruch 2, ferner umfassend:

Mittel (61) zum Korrigieren des Referenzansaugluftbetrages (GALTHCMD) unter der Normalbedingung, derart, dass ein Referenzansaugluftbetrag (GALTHCMDF) unter einem gegenwärtigen atmosphärischen Druck (PA) und einer gegenwärtigen Ansauglufttemperatur (TA) angezeigt wird; Mittel zum Auswählen aus den Speichermitteln einer Karte, die der Zieldrehgeschwindigkeit des Verbrennungsmotors (12), dem vorbestimmten Manometerdruck (PBGACMD_CONST) und der vorbestimmten Phase entspricht und zum Bestimmen eines zweiten Zielluftbetrages (ALCMD_PATA) durch Bezugnahme auf die ausgewählte Karte basierend auf den Referenzansaugluftbetrag (GALTHCMDF) unter dem gegenwärtigen atmosphärischen Druck (PA) und der gegenwärtigen Ansauglufttemperatur (TA); und Mittel (71) zum Betreiben des variablen Ventilbetätigungsmechanismus (31) gemäß dem zweiten Zielhubbetrag (ALCMD_PATA).

7. Verfahren zum Bestimmen eines Zielansaugkrümmerdrucks (PBGACMD_CHNG) in einem Verbrennungsmotor (12), welcher einen variablen Ventilbetätigungsmechanismus (31) zum Einstellen eines Hubbetrages (ALCMD) eines Ansaugventils (14) umfasst und welcher einen ersten Betriebsbereich implementiert, in welchem ein Zielansaugluftbetrag (GAIRCMD) erzielt wird, indem der Zielansaugkrümmerdruck (PBGACMD_CHNG) geändert wird, während ein Zielhubbetrag (ALCMD) konstant gehalten wird, wobei nach dem ersten Betriebsbereich ein zweiter Betriebsbereich implementiert wird, in welchem der Zielansaugluftbetrag (GAIRCMD) höher als der Zielluftbetrag (GAIRCMD) des ersten Betriebsbereichs ist und welcher dadurch erreicht wird, dass der Zielhubbetrag (ALCMD) geändert wird, während der Zielansaugkrümmerdruck (PBGACMD_CHNG) bei einem vorbestimmten Manometerdruck (PBGACMD_CONST) gehalten wird, umfassend die Schritte:

Bestimmen (S1) des Zielhubbetrages (ALCMD) in dem ersten Betriebsbereich auf Grundlage eines Referenzansaugluftbetrags (GALTHCMD), welcher gemäß einem Betriebszustand des Verbrennungsmotors (12) bestimmt wird; Darstellen des Zielansaugkrümmerdruckes (PBGACMD_CHNG) in dem ersten Betriebsbereich durch eine Gleichung erster Ordnung, welche eine Funktion ist, die von dem Zielansaugluftbetrag (GAIRCMD) abhängig ist, und Bestimmen der Gleichung erster Ordnung durch Berechnen (S5, S6) einer Steigung (A) und eines Achsenabschnitts (B) der Funktion auf Grundlage des Zielhubbetrages (ALCMD); und Berechnen (S7) des Zielansaugkrümmerdruckes (PBGACMD_CHNG) in dem ersten Betriebsbereich, durch Einsetzen des Zielansaugluftbetrages (GAIRCMD), welcher durch den Verbrennungsmotor (12) gemäß dem Betriebszustand angefordert wird, in der somit bestimmten Gleichung erster Ordnung.

8. Verfahren nach Anspruch 7, wobei eine oder mehrere Karten in einer Speichervorrichtung gespeichert sind, die Korrelationen zwischen einem Ansaugluftbetrag (GAIR), einer Drehgeschwindigkeit des Verbrennungsmotors, einem Manometerdruck (PBGA) des Ansaugkrümmers, einer Phase (CAIN) des Ansaugventils (14) und einem Hubbetrag (ALCMD) des Ansaugventils (ALCMD) unter einer Normalbedingung eines normalen atmosphärischen Drucks (PA_STD) und einer normalen Ansauglufttemperatur (TA_STD); das Verfahren umfasst ferner ein Korrigieren (S11) des Referenzansaugluftbetrages (GALTHCMD) unter der Normalbedingung, derart, dass ein Referenzansaugluftbetrag (GALTHCMDA) unter einem gegenwärtigen atmosphärischen Druck (PA) angezeigt wird, wobei der Schritt (S1) des Bestimmens des Zielhubbetrags (ALCMD) ein Auswählen (S12) einer Karte aus der Speichervorrichtung umfasst, die einer Zieldrehgeschwindigkeit des Verbrennungsmotor (12), dem vorbestimmten Manometerdruck (PBGACMD_CONST) und einer vorbestimmten Phase entspricht und ein Bestimmen (S14) des Zielhubbetrages (ALCMD_PA), durch Bezugnahme (S13) auf die ausgewählte Karte, basierend auf dem Referenzansaugluftbetrag (GALTHCMDA) unter dem gegenwärtigen atmosphärischen Druck (PA).

9. Verfahren nach Anspruch 8, ferner umfassend:

Auswählen aus der Speichervorrichtung einer Karte, die einer detektierten Drehgeschwindigkeit des Verbrennungsmotors (12), einer detektierten Phase des Ansaugventils (14) und dem vorbestimmten Manometerdruck (PBGACMD_CONST) entspricht und Bestimmen (S2) eines ersten Ansaugluftbetrages (GAIR1) durch Bezugnahme auf die ausgewählte Karte basierend auf den Zielhubbetrag (ALCMD_PA); Auswählen aus der Speichervorrichtung einer Karte, die der detektierten Drehgeschwindigkeit des Verbrennungsmotors (12), der detektierten Phase des Ansaugventils (14) und einem zweiten Manometerdruck (PBGA2) entspricht, welcher von dem vorbestimmten Manometerdruck (PBGACMD_CONST) verschieden ist, und Bestimmen (S3) eines zweiten Ansaugluftbetrages (GAIR2) durch Bezugnahme auf die ausgewählte Karte basierend auf dem Zielhubbetrag (ALCMD); und

Berechnen (S5) der Steigung (A) auf Grundlage des ersten Ansaugluftbetrages (GAIR1), welcher dem vorbestimmten Manometerdruck (PBGACMD_CONST) entspricht und des zweiten Ansaugluftbetrages (GAIR1), welcher dem zweiten Manometerdruck (PBGA12) entspricht.

**10.** Verfahren nach Anspruch 9, ferner umfassend:

Auswählen aus der Speichervorrichtung einer Karte, die der Zieldrehgeschwindigkeit des Verbrennungsmotors (12), dem vorbestimmten Manometerdruck (PBGACMD_CONST) und einer vorbestimmten Phase entspricht und Bestimmen (S13) eines normalen Hubbetrags (ALCMD_STD) durch Bezugnahme auf die ausgewählte Karte basierend auf dem Referenzansaugluftbetrag (GALTHCMD) unter der Normalbedingung;

Auswählen aus den Speichervorrichtung einer Karte, die der detektierten Drehgeschwindigkeit des Verbrennungsmotors (12), der detektierten Phase des Ansaugventils (14) und dem vorbestimmten Manometerdruck (PBGACMD_CONST) entspricht und Bestimmen (S4) eines Übergangsansaugluftbetrages (GAPBPARX) an einem Übergang von dem ersten Betriebsbereich zu dem zweiten Betriebsbereich durch Bezugnahme auf die ausgewählte Karte basierend auf dem Normalhubbetrag (ALCMD_STD); und

Berechnen (S6) des Achsenabschnitts (B) auf Grundlage der Steigung (A) und des Übergangsansaugluftbetrages (ALCMD_STD).

**11.** Verfahren nach einem der Ansprüche 7 bis 10, ferner umfassend ein Beschränken (S8) des Zielansaugkrümmerdruckes (PBGACMDM_CHNG), so dass der Zielansaugkrümmerdruck (PBGACMDM_CHNG) den vorbestimmten Manometerdruck (PBGACMD_CONST) nicht übersteigt.

**12.** Verfahren nach Anspruch 8, ferner umfassend:

Korrigieren (S11) des Referenzansaugluftbetrages (GALTHCMD) unter der Normalbedingung, derart, dass ein Referenzansaugluftbetrag (GALTHCMDF) unter einem gegenwärtigen atmosphärischen Druck (PA) und einer gegenwärtigen Ansauglufttemperatur (TA) angezeigt wird;

Auswählen (S12) aus der Speichervorrichtung einer Karte, die der Zieldrehgeschwindigkeit des Verbrennungsmotors (12), dem vorbestimmten Manometerdruck (PBGACMD_CONST) und der vorbestimmten Phase entspricht und Bestimmen eines zweiten Zielhubbetrages (ALCMD_PATA) durch Bezugnahme (S15) auf die ausgewählte Karte basierend auf dem Referenzansaugluftbetrag (GALTHCMDF) unter dem gegenwärtigen atmosphärischen Druck (PA) und der gegenwärtigen Ansauglufttemperatur (TA); und

Bedienen des variablen Ventilbetätigungsmechanismus (31) gemäß dem zweiten Zielhubbetrag (ALCMD_PATA).

## Revendications

**1.** Dispositif de commande (10) pour déterminer une pression de collecteur d'admission à atteindre (PBGACMD_CHNG) dans un moteur à combustion interne (12) qui comprend un mécanisme d'actionnement variable de soupape (31) pour régler une quantité de levée (ALCMD) d'une soupape d'admission (14) et implémente une première plage de fonctionnement dans laquelle une quantité d'air d'admission à atteindre (GAIRCMD) est réalisée en changeant la pression de collecteur d'admission à atteindre (PBGACMD_CHNG) tout en maintenant constante une quantité de levée à atteindre (ALCMD), dans lequel, à la suite de la première plage de fonctionnement, une deuxième plage de fonctionnement est implémentée dans laquelle la quantité d'air d'admission à atteindre (GAIRCMD) est plus élevée que la quantité d'air à atteindre (GAIRCMD) de la première plage de fonctionnement et est réalisée en changeant la quantité de levée à atteindre (ALCMD) tout en maintenant la pression de collecteur d'admission à atteindre (PBGACMD_CHNG) à une pression manométrique prédéterminée (PBGACMD_CONST), comprenant:

un moyen de détermination de la quantité de levée à atteindre (62) pour déterminer la quantité de levée à atteindre (ALCMD) dans la première plage de fonctionnement sur base d'une quantité d'air d'admission de référence (GALTHCMD) déterminée selon un état de fonctionnement du moteur à combustion interne (12);

un moyen pour représenter la pression de collecteur d'admission à atteindre (PBGACMD_CHNG) dans la première plage de fonctionnement à l'aide d'une équation du premier degré qui est une fonction dépendant de la quantité d'air d'admission à atteindre (GAIRCMD) et pour déterminer l'équation du premier degré en calculant une pente (A) et une intersection (B) de la fonction sur base de la quantité de levée à atteindre (ALCMD); et.

un moyen (66) pour calculer la pression de collecteur d'admission à atteindre (PBGACMD_CHNG) dans la première plage de fonctionnement en insérant la quantité d'air d'admission à atteindre (GAIRCMD), qui est demandée par le moteur à combustion interne (12) suivant l'état de fonctionnement, dans l'équation du premier degré ainsi déterminée.

2. Dispositif de commande (10) suivant la revendication 1, dans lequel le dispositif comprend en outre:

un moyen de stockage (10) pour stocker une ou plusieurs cartes définissant des corrélations parmi une quantité d'air d'admission (GAIR), une vitesse de rotation du moteur à combustion interne, une pression manométrique (PBGA) du collecteur d'admission, une phase (CAIN) de la soupape d'admission (14) et une quantité de levée (ALCMD) de la soupape d'admission (14) dans des conditions standard d'une pression atmosphérique standard (PA_STD) et une température standard de l'air d'admission (TA_STD); et
un moyen (61) pour corriger la quantité d'air d'admission de référence (GALTHCMD) dans les conditions standard de manière à indiquer une quantité d'air d'admission de référence (GALTHCMDA) sous une pression atmosphérique présente (PA),
dans lequel le moyen de détermination de la quantité de levée à atteindre (62) sélectionne, dans le moyen de stockage, une carte correspondant à une vitesse de rotation à atteindre du moteur à combustion interne (12), à la pression manométrique prédéterminée (PBGACMD_CONST) et à une phase prédéterminée et détermine la quantité de levée à atteindre (ALCMD) en se référant à la carte sélectionnée sur base de la quantité d'air d'admission de référence (GALTHCMDA) sous la pression atmosphérique présente (PA).

3. Dispositif de commande (10) selon la revendication 2, comprenant en outre:

un moyen pour sélectionner, dans le moyen de stockage (10), une carte correspondant à une vitesse de rotation détectée du moteur à combustion interne (12), à une phase détectée de la soupape d'admission (14) et à la pression manométrique prédéterminée (PBGACMD_CONST) et pour déterminer une première quantité d'air d'admission (GAIR1) en se référant à la carte sélectionnée sur base de la quantité de levée à atteindre (ALCMD);
un moyen pour sélectionner, dans le moyen de stockage, une carte correspondant à la vitesse de rotation détectée du moteur à combustion interne, à la phase détectée de la soupape d'admission (14) et à une deuxième pression manométrique (PBGA2) qui diffère de la pression manométrique déterminée (PBGACMD_CONST) et pour déterminer une deuxième quantité d'air d'admission (GAIR2) en se référant à la carte sélectionnée sur base de la quantité de levée à atteindre (ALCMD); et
un moyen (63) pour calculer la pente (A) sur base de la première quantité d'air d'admission (GAIR1) correspondant à la pression manométrique prédéterminée (PBGACMD_CONST) et de la deuxième quantité d'air d'admission (GAIR1) correspondant à la deuxième pression manométrique (PBGA2).

4. Dispositif de commande (10) selon la revendication 3, comprenant en outre:

un moyen pour sélectionner, dans le moyen de stockage, une carte correspondant à la vitesse de rotation à atteindre du moteur à combustion interne (12), à la pression manométrique prédéterminée (PBGACMD_CONST) et à une phase prédéterminée et pour déterminer une quantité de levée standard (ALCMD_STD) en se référant à la carte sélectionnée sur base de la quantité d'air d'admission de référence (GALTHCMD) dans les conditions standard;
un moyen pour sélectionner, dans le moyen de stockage, une carte correspondant à la vitesse de rotation détectée du moteur à combustion interne (12), à la phase détectée de la soupape d'admission (14) et à la pression manométrique prédéterminée (PBGACMD_CONST) et pour déterminer une quantité d'air d'admission de transition (GAPBPARX) à une transition de la première plage de fonctionnement à la deuxième plage de fonctionnement en se référant à la carte sélectionnée sur base de la quantité de levée standard (ALCMD_STD); et
un moyen (64) pour calculer l'intersection (B) sur base de la pente (A) et de la quantité d'air d'admission de transition (GAPBPARX).

5. Dispositif de commande (10) suivant l'une des revendications 1 à 4, comprenant en outre:

un moyen (67) pour limiter la pression de collecteur d'admission à atteindre (PBGACMDM_CHNG) de telle façon que la pression de collecteur d'admission à atteindre (PBGACMDM_CHNG) ne dépasse pas la pression manométrique prédéterminée (PBGACMD_CONST).

6. Dispositif de commande (10) selon la revendication 2, comprenant en outre:

un moyen (61) pour corriger la quantité d'air d'admission de référence (GALTHCMD) dans les conditions standard de façon à indiquer une quantité d'air d'admission de référence (GALTHCMDF) sous une pression atmosphérique présente (PA) et à une température d'air d'admission présente (TA);

un moyen pour sélectionner, dans le moyen de stockage, une carte correspondant à la vitesse de rotation à atteindre du moteur à combustion interne (12), à la pression manométrique prédéterminée (PBGACMD_CONST) et à la phase prédéterminée et déterminer une deuxième quantité de levée à atteindre (ALCMD_PATA) en se référant à la carte sélectionnée sur base de la quantité d'air d'admission de référence (GALTHCMDF) sous la pression atmosphérique présente (PA) et à la température d'air d'admission présente (TA); et

un moyen (71) pour actionner le mécanisme d'actionnement variable de soupape (31) en fonction de la deuxième quantité de levée à atteindre (ALCMD_PATA).

7. Procédé pour déterminer une pression de collecteur d'admission à atteindre (PBGACMD_CHNG) dans un moteur à combustion interne (12) qui comprend un mécanisme d'actionnement variable de soupape (31) pour régler une quantité de levée (ALCMD) d'une soupape d'admission (14) et implémente une première plage de fonctionnement dans laquelle une quantité d'air d'admission à atteindre (GAIRCMD) est réalisée en changeant la pression de collecteur d'admission à atteindre (PBGACMD_CHNG) tout en maintenant constante une quantité de levée à atteindre (ALCMD), dans lequel, à la suite de la première plage de fonctionnement, une deuxième plage de fonctionnement est implémentée dans laquelle la quantité d'air d'admission à atteindre (GAIRCMD) est plus élevée que la quantité d'air d'admission à atteindre (GAIRCMD) de la première plage de fonctionnement et est réalisée en changeant la quantité de levée à atteindre (ALCMD) tout en maintenant la pression de collecteur d'admission à atteindre (PBGACMD_CHNG) à une pression manométrique prédéterminée (PBGACMD_CONST), comprenant les étapes de:

déterminer (S1) la quantité de levée à atteindre (ALCMD) dans la première plage de fonctionnement sur base d'une quantité d'air d'admission de référence (GALTHCMD) déterminée selon un état de fonctionnement du moteur à combustion interne (12);

représenter la pression de collecteur d'admission à atteindre (PBGACMD CHNG) dans la première plage de fonctionnement à l'aide d'une équation du premier degré qui est une fonction dépendant de la quantité d'air d'admission à atteindre (GAIRCMD) et déterminer l'équation du premier degré en calculant (S5, S6) une pente (A) et une intersection (B) de la fonction sur base de la quantité de levée à atteindre (ALCMD); et

calculer (S7) la pression de collecteur d'admission à atteindre (PBGACMD_CHNG) dans la première plage de fonctionnement en insérant la quantité d'air d'admission à atteindre (GAIRCMD), qui est demandée par le moteur à combustion interne (12) suivant l'état de fonctionnement, dans l'équation du premier degré ainsi déterminée.

8. Procédé suivant la revendication 7,

dans lequel une ou plusieurs cartes définissant des corrélations parmi une quantité d'air d'admission (GAIR), une vitesse de rotation du moteur à combustion interne, une pression manométrique (PBGA) du collecteur d'admission, une phase (CAIN) de la soupape d'admission (14) et une quantité de levée de la soupape d'admission (ALCMD) dans des conditions standard d'une pression atmosphérique standard (PA_STD) et d'une température standard de l'air d'admission (TA_STD) sont stockées dans un dispositif de stockage,

le procédé comprenant en outre de corriger (S11) la quantité d'air d'admission de référence (GALTHCMD) dans les conditions standard de telle manière à indiquer une quantité d'air d'admission de référence (GALTHCMDA) sous une pression atmosphérique présente (PA),

dans lequel l'étape (S1) de détermination de la quantité de levée à atteindre (ALCMD) comprend la sélection (S12), dans le moyen de stockage, d'une carte correspondant à une vitesse de rotation à atteindre du moteur à combustion interne (12), à la pression manométrique prédéterminée (PBGACMD_CONST) et à une phase prédéterminée et la détermination (S14) de la quantité de levée à atteindre (ALCMD PA) en se référant (S13) à la carte sélectionnée sur base de la quantité d'air d'admission de référence (GALTHCMDA) sous la pression atmosphérique présente (PA).

9. Procédé suivant la revendication 8, comprenant en outre:

la sélection, dans le moyen de stockage, d'une carte correspondant à une vitesse de rotation détectée du moteur à combustion interne (12), à une phase détectée de la soupape d'admission (14) et à la pression manométrique prédéterminée (PBGACMD_CONST) et la détermination (S2) d'une première quantité d'air d'admission (GAIR1) en se référant à la carte sélectionnée sur base de la quantité de levée à atteindre (ALCMD_PA);

la sélection, dans le moyen de stockage, d'une carte correspondant à la vitesse de rotation détectée du moteur à combustion interne (12), à la phase détectée de la soupape d'admission (14) et à une deuxième pression manométrique (PBGA2) qui diffère de la pression manométrique déterminée (PBGACMD_CONST) et la détermination (S3) d'une deuxième quantité d'air d'admission (GAIR2) en se référant à la carte sélectionnée sur base de la quantité de levée à atteindre (ALCMD); et

le calcul (S5) de la pente (A) sur base de la première quantité d'air d'admission (GAIR1) correspondant à la pression manométrique prédéterminée (PBGACMD_CON5T) et de la deuxième quantité d'air d'admission (GAIR2) correspondant à la deuxième pression manométrique (PBGA2).

10. Procédé suivant la revendication 9, comprenant en outre:

la sélection, dans le moyen de stockage, d'une carte correspondant à la vitesse de rotation à atteindre du moteur à combustion interne (12), à la pression manométrique prédéterminée (PBGACMD_CONST) et à une phase prédéterminée et la détermination (S13) d'une quantité de levée standard (ALCMD_STD) en se référant à la carte sélectionnée sur base de la quantité d'air d'admission de référence (GALTHCMD) dans les conditions standard;

la sélection, dans le dispositif de stockage, d'une carte correspondant à la vitesse de rotation détectée du moteur à combustion interne (12), à la phase détectée de la soupape d'admission (14) et à la pression manométrique prédéterminée (PBGACMD_CONST) et la détermination (S4) d'une quantité d'air d'admission de transition (GAPBPARX) à une transition de la première plage de fonctionnement à la deuxième plage de fonctionnement en se référant à la carte sélectionnée sur base de la quantité de levée standard (ALCMD_STD); et

le calcul (S6) de l'intersection (B) sur base de la pente (A) et de la quantité d'air d'admission de transition (ALCMD_STD).

11. Procédé suivant l'une des revendications 7 à 10, comprenant en outre la limitation (S8) de la pression de collecteur d'admission à atteindre (PBGACMDM_CHNG) de telle façon que la pression de collecteur d'admission à atteindre (PBGACMOM_CHNG) ne dépasse pas la pression manométrique prédéterminée (PBGACMD_CONST).

12. Procédé suivant la revendication 8, comprenant en outre:

la correction (S11) de la quantité d'air d'admission de référence (GALTHCMD) dans les conditions standard de façon à indiquer une quantité d'air d'admission de référence (GALTHCMDF) sous une pression atmosphérique présente (PA) et à une température d'air d'admission présente (TA);

la sélection (S12), dans le moyen de stockage, d'une carte correspondant à la vitesse de rotation à atteindre du moteur à combustion interne (12), à la pression manométrique prédéterminée (PBGACMD_CONST) et à la phase prédéterminée et la détermination d'une deuxième quantité de levée à atteindre (ALCMD_PATA) en se référant (S15) à la carte sélectionnée sur base de la quantité d'air d'admission de référence (GALTHCMDF) sous la pression atmosphérique présente (PA) et à la température d'air d'admission présente (TA); et

l'actionnement du mécanisme d'actionnement variable de soupape (31) en fonction de la deuxième quantité de levée à atteindre (ALCMD_PATA).

Figure 1

# Figure 2

Target intake
manifold pressure
(absolute pressure, mmHg)

Reference
gauge
pressure

101, 102

760

450

103

B

A

Target intake air amount

Target lift amount
(mm)

113
112
111

Target intake air amount

Negative pressure
control region

Lift amount
control region

Transition intake
air amount
GAPBPARX

Figure 3

Reference intake air amount corrected with atmospheric pressure: GALTHCMDA

Second target lift amount: ALCMD_PATA

71

Lift amount controller — manipulated variable → to Variable lift mechanism 32

Reference intake air amount corrected with atmospheric pressure and intake air temperature: GALTHCMDF

Reference intake air amount: GALTHCMD

61 Reference intake air amount correcting part

62 Target lift determining part

First target lift amount: ALCMD_PA

63 Slope calculating part

Slope: A

66 Target intake manifold pressure determining part

Target intake manifold pressure: PBGACMDM

67 Limit process part

Intercept : B

Final target intake manifold pressure: PBGACMD

72 Throttle controller

Standard lift amount: ALCMD_STD

64 Intercept calculating part

First-order equation calculating part 65

Target intake air amount: GAIRCMD

70 Intake air amount map (Standard condition)

manipulated variable

to Throttle valve actuator

# Figure 4

Lift amount

Lift amount ←----------------------------

Reference intake
air amount

Intake air
amount

# Figure 5

(a)

Lift amount

132

131

Second gauge
pressure
PBGA2

First gauge pressure
PBGA1
(=PBGACMD_CONST)

First target
lift amount:
ALCMD_PA

Intake air
amount

Second
intake
air
amount
GAIR2

First
intake
air
amount
GAIR1

(b)

Lift amount

Standard lift amount:
ALCMD_STD

Intake air
amount

Transition intake
air amount:
GAPBPARX

# Figure 6

14

16

S

GAIR
_CYL

TA, PB, $\rho$

V

PBGA=PA−PB

Figure 7

Determination of
Target intake
manifold pressure

Determination of
Target lift amount — S1

Determination of
First intake air amount GAIR1
in First gauge pressure PBGA1 — S2

Determination of
Second intake air amount GAIR2
in Second gauge pressure PBGA2 — S3

Determination of
Transition intake air amount
GAPBPARX — S4

Results of S2 and S3 are used to
calculate Slope A — S5

Result of S4 is used to
calculate Intercept B — S6

Calculation of Target intake
manifold pressure (gauge pressure)
by First-order equation of
Slope A and Intercept B — S7

Limit process — S8

Determination of
Target intake manifold pressure
(absolute pressure) — S9

EXIT

# Figure 8

```
            ┌─────────────────────┐
            │   Determination of   │
            │   Target lift amount │
            └─────────────────────┘
                       │
                       ▼
  ┌─────────────────────────────────────────────────┐
  │  Correct Reference intake air amount GALTHCMD      │      S11
  │  to determine Reference intake air amount GALTHCMDA│
  │        corrected with atmospheric pressure  and    │
  │  Reference intake air amount GALTHCMDF corrected with│
  │     atmospheric pressure and intake air temperature │
  └─────────────────────────────────────────────────┘
                       │
                       ▼
    ┌───────────────────────────────────────────┐
    │   Select Intake air amount map corresponding│     S12
    │  Target rotational speed, Reference gauge pressure│
    │            and Reference phase              │
    └───────────────────────────────────────────┘
                       │
                       ▼
    ┌───────────────────────────────────────────┐
    │         Referring to the Map based on       │     S13
    │  Reference intake air amount GALTHCMD to    │
    │  determine Standard lift amount ALCMD__STD  │
    └───────────────────────────────────────────┘
                       │
                       ▼
   ┌────────────────────────────────────────────┐
   │         Referring to the Map based on        │     S14
   │  Reference intake air amount GALTHCMDA       │
   │       corrected with atmospheric pressure to │
   │  determine First target lift amount ALCMD__PA│
   └────────────────────────────────────────────┘
                       │
                       ▼
  ┌──────────────────────────────────────────────────────┐
  │            Referring to the Map based on               │   S15
  │        Reference intake air amount GALTHCMDF           │
  │ corrected with atmospheric pressure and intake air temperature│
  │   to determine Second terget lift amount ALCMD__PATA  │
  └──────────────────────────────────────────────────────┘
                       │
                       ▼
                ┌──────────────┐
                │     EXIT      │
                └──────────────┘
```

# Figure 9

(a)

$$\boxed{\begin{array}{c}\text{Determination of} \\ \text{First intake air amount} \\ \text{in First gauge pressure}\end{array}}$$

↓

| Select Map corresponding to First gauge pressure, Present rotational speed, First phase CAIN1 and Refer to the Map based on First target lift amount ALCMD__PA to determine Corresponding intake air amount GA1 | S31 |

↓

| Select Map corresponding to First gauge pressure, Present rotational speed, Second phase CAIN2 and Refer to the Map based on First target lift amount ALCMD__PA to determine Corresponding intake air amount GA2 | S32 |

↓

| Select Map corresponding to First gauge pressure, Present rotational speed, Third phase CAIN3 and Refer to the Map based on First target lift amount ALCMD__PA to determine Corresponding intake air amount GA3 | S33 |

↓

| Interpolation calculation is applied to GA1~GA3 to determine First intake air amount GAIR1 corresponding to Present phase CAIN | S34 |

↓

EXIT

(b)

$$\boxed{\begin{array}{c}\text{Determination of} \\ \text{Second intake air amount in} \\ \text{Second gauge pressure}\end{array}}$$

↓

| Select Map corresponding to Second gauge pressure, Present torational speed, First phase CAIN1 and Refer to the Map based on First target lift amount ALCMD__PA to determine Corresponding intake air amount GA1 | S41 |

↓

| Select Map corresponding to Second gauge pressure, Present torational speed, Second phase CAIN2 and Refer to the Map based on First target lift amount ALCMD__PA to determine Corresponding intake air amount GA2 | S42 |

↓

| Select Map corresponding to Second gauge pressure, Present torational speed, Third phase CAIN3 and Refer to the Map based on First target lift amount ALCMD__PA to determine Corresponding intake air amount GA3 | S43 |

↓

| Interpolation calculation is applied to GA1~GA3 to determine Second intake air amount GAIR2 corresponding to Present phase CAIN | S44 |

↓

EXIT

# Figure 10

(a)

(b)

Figure 11

```
        ┌─────────────────────────────┐
        │   Determination of Transition│
        │      intake air amount       │
        └─────────────────────────────┘
                      │
                      ▼
  ┌──────────────────────────────────────────────┐
  │  Select Map corresponding to Reference gauge  │        S51
  │  pressure, Present rotational speed, First    │
  │  phase CAIN1 and                              │
  │  Refer to the Map based on Standard lift      │
  │  amount ALCMD_STD to determine corresponding  │
  │  Intake air amount GA1                        │
  └──────────────────────────────────────────────┘
                      │
                      ▼
  ┌──────────────────────────────────────────────┐
  │  Select Map corresponding to Reference gauge  │        S52
  │  pressure, Present rotational speed, Second   │
  │  phase CAIN2 and                              │
  │  Refer to the Map based on Standard lift      │
  │  amount ALCMD_STD to determine corresponding  │
  │  Intake air amount GA2                        │
  └──────────────────────────────────────────────┘
                      │
                      ▼
  ┌──────────────────────────────────────────────┐
  │  Select Map corresponding to Reference gauge  │        S53
  │  pressure, Present rotational speed, Third    │
  │  phase CAIN3 and                              │
  │  Refer to the Map based on Standard lift      │
  │  amount ALCMD_STD to determine corresponding  │
  │  Intake air amount GA3                        │
  └──────────────────────────────────────────────┘
                      │
                      ▼
  ┌──────────────────────────────────────────────┐
  │  Interpolation calculation is applied to      │        S54
  │  GA1～GA3 to determine Transition intake air   │
  │  amount GAIRBPARX corresponding to Present    │
  │  phase CAIN                                   │
  └──────────────────────────────────────────────┘
                      │
                      ▼
            ┌──────────────────┐
            │      EXIT         │
            └──────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004169573 A
- WO 2004016925 A1
- WO 2006015919 A1
- EP 1375883 A2
- JP 2005069141 A
- JP 2007182787 A
- JP 2004036560 A
- JP 2000227033 A